# FASCICULE DE BREVET EUROPEEN

(11) **EP 0 652 835 B1**
(45) Date de publication et mention de la délivrance du brevet: **18.08.1999**
(21) Numéro de dépôt: 94914533.8
(22) Date de dépôt: 24.05.1994
(51) Int. Cl.: B60L 11/02

(54) **VEHICULE AUTOMOBILE A TRACTION ELECTRIQUE**
KRAFTFAHRZEUG MIT ELEKTRISCHEM ANTRIEB
ELECTRICALLY-DRIVEN CAR

(30) Priorité: 02.06.1993 FR 9306690
(43) Date de publication de la demande: 17.05.1995
(73) Titulaire: The Swatch Group Management Services AG, 2501 Biel (CH)
(72) Inventeur: JEANNERET, René, CH-3274 Merzligen (CH); EDYE, Thomas, CH-2017 Boudry (CH); MÜLLER, Jacques, CH-2732 Reconvilier (CH)
(74) Mandataire: de Montmollin, Henri
(86) Numéro de dépôt international: IB9400119
(87) Numéro de publication internationale: WO9427837

(56) Documents cités:
- EP-A- 0 543 390
- WO-A-93/07022
- DE-C- 2 943 554
- US-A- 4 306 156

## Description

La présente invention concerne un véhicule automobile comportant :
- un moteur à carburant pour produire une première puissance mécanique;
- un générateur pour convertir ladite première puissance mécanique en une première puissance électrique;
- des moyens de commande actionnables par un conducteur dudit véhicule pour produire un signal de consigne représentatif d'une puissance de consigne;
- une roue motrice; et
- des moyens moteurs pour fournir une deuxième puissance mécanique à ladite roue motrice à partir d'une deuxième puissance électrique, lesdits moyens moteurs comprenant un moteur électrique couplé mécaniquement à ladite roue motrice et un circuit de commande dudit moteur électrique répondant audit signal de consigne pour régler la valeur de ladite deuxième puissance mécanique à la valeur de ladite puissance de consigne.

Les véhicules automobiles présentant les caractéristiques ci-dessus, tels que ceux qui sont décrits, par exemple, dans les brevets US-4 306 156 et DE-C-2 943 554, comportent en outre une batterie d'accumulateurs qui fournit la plupart du temps l'énergie consommée par leur moteur électrique. Le moteur a carburant de ces véhicules connus n'est mis en marche que lorsque la quantité d'énergie disponible dans la batterie descend en dessous d'une valeur prédéterminée, ce moteur à carburant fournissant alors, par l'intermédiaire du générateur qui lui est couplé, l'énergie consommée par le moteur électrique et celle qui est nécessaire à la recharge de la batterie. Lorsque la quantité d'énergie disponible dans la batterie atteint une autre valeur prédéterminée, supérieure à la précédente, le moteur à carburant est arrêté, l'énergie consommée par le moteur électrique étant alors à nouveau fournie exclusivement par la batterie. Le brevet DE-C-2 943 554 prévoit en outre de faire fonctionner le moteur électrique en générateur pour freiner le véhicule, l'énergie électrique ainsi produite étant fournie à la batterie pour autant que celle-ci ne soit pas déjà complètement chargée.

Dans le document EP-A-0 543 390, il est prévu de partager en trois parties la gamme de puissance demandée sur les roues :
A) un premier domaine de puissance faible, dans lequel le moteur thermique est mis hors service et c'est uniquement la batterie qui fournit de l'énergie aux moteurs électriques;
B) un deuxième domaine de puissance moyenne, dans lequel seul le moteur à explosion fournit de l'énergie, tandis que le courant de la batterie est nul, et
C) un troisième domaine de puissance élevée, dans lequel le moteur thermique et la batterie fournissent tous deux de l'énergie.

Un véhicules tel que ceux qui viennent d'être décrits présente de nombreux inconvénients causés par la batterie d'accumulateurs qui l'équipe.

Ainsi, par exemple, une telle batterie a une masse élevée, généralement supérieure à 100 kilogrammes et pouvant même atteindre plusieurs centaines de kilogrammes, ce qui augmente la masse à vide du véhicule équipé de cette batterie et diminue donc le rendement global de ce dernier, c est-à-dire la distance qu'il peut parcourir, toutes autres choses étant égales, en consommant une quantité d'énergie déterminée.

De même, une telle batterie a un volume très important, ce qui diminue le rapport entre le volume interne utile du véhicule dans lequel elle est installée et le volume total de celui-ci.

En outre, le prix d'une telle batterie est élevé, ce qui augmente le prix de revient du véhicule, et sa durée de vie est limitée, ce qui oblige à la remplacer périodiquement et augmente donc les frais d'entretien de ce véhicule.

De plus, la masse et le volume élevés d'une telle batterie posent de sérieux problèmes en ce qui concerne sa fixation dans le véhicule, problèmes qui sont encore compliqués par le fait que cette batterie doit être facilement accessible pour permettre son entretien et/ou son remplacement et qui ne peuvent être résolus qu'en utilisant des moyens assez complexes dont le prix vient encore s'ajouter au prix de revient du véhicule.

On peut encore mentionner que de telles batteries présentent un risque sérieux pour l'environnement en cas d'accident du véhicule du fait de la quantité importante de matériaux polluants tels que le plomb, l'acide sulfurique ou l'hydroxyde de potassium qu'elles contiennent.

Un but de la présente invention est de proposer un véhicule du même genre que les véhicules connus décrits ci-dessus, mais qui ne présente pas les inconvénients de ceux-ci, c'est-à-dire un véhicule qui a, toutes autres choses étant égales, une masse plus faible que celle des véhicules connus et donc un rendement global plus élevé que ces derniers, un prix de revient et des frais d'entretien également plus faibles que ceux de ces véhicules connus, ce véhicule selon la présente invention ayant en outre un rapport entre son volume utile et son volume total plus favorable que ces véhicules connus et présentant des risques pour l'environnement, en cas d'accident, bien plus faibles que ceux que présentent ces véhicules connus.

Ce but est atteint par le véhicule automobile revendiqué, qui comporte :
- un moteur à carburant pour produire une première puissance mécanique;
- un générateur pour convertir ladite première puissance mécanique en une première puissance électrique;
- des moyens de commande actionnables par un conducteur dudit véhicule pour produire un signal de consigne représentatif d'une puissance de consigne;
- une roue motrice; et
- des moyens moteurs pour fournir une deuxième puissance mécanique à ladite roue motrice à partir d'une deuxième puissance électrique, lesdits moyens moteurs comprenant un moteur électrique couplé mécaniquement a ladite roue motrice et un circuit de commande dudit moteur électrique répondant audit signal de consigne pour régler la valeur de ladite deuxième puissance mécanique à la valeur de ladite puissance de consigne;
   et qui est caractérisé par le fait que ledit véhicule comporte en outre des moyens de réglage répondant audit signal de consigne pour régler la vitesse de rotation dudit moteur à carburant à la valeur pour laquelle ladite première puissance mécanique est au moins sensiblement égale, d'une part, à ladite puissance de consigne et, d'autre part, à une fraction déterminée de la puissance mécanique maximale dudit moteur à carburant, que lesdits moyens de réglage comprenant des moyens de transfert couplés électriquement audit générateur et auxdits moyens moteurs pour produire ladite deuxième puissance électrique à partir de ladite première puissance électrique et que le couple de freinage exercé par le générateur sur le moteur à carburant est diminué lorsqu'une augmentation de ladite vitesse de rotation est demandée.

Comme cela sera montré plus loin, ces caractéristiques permettent au véhicule selon la présente invention de ne comporter, au moins dans certaines de ses formes d'exécution, aucune batterie d'accumulateurs telle que celle qui fournit au moteur électrique des véhicules connus l'énergie électrique nécessaire à leur fonctionnement. Ces caractéristiques permettent également au véhicule selon la présente invention de ne comporter, dans d'autres de ses formes d'exécution, qu'une batterie d'accumulateurs de capacité considérablement plus faible que celle qui équipe les véhicules connus.

En outre, le document WO 93/07022 décrit un véhicule comportant un moteur thermique couplé à une génératrice sans présence d'un accumulateur. Même s'il est prévu de garder constant le couple sur l'arbre de sortie du moteur thermique pendant une phase d'augmentation du nombre de tours, cette solution ne permet pas de changer le régime du moteur d'une manière rapide.

Les caractéristiques du véhicule selon la présente invention permettent donc d'éliminer complètement, ou au moins de diminuer considérablement, les inconvénients mentionnés ci-dessus et qui sont liés, dans les véhicules connus, à la présence d'une batterie d'accumulateurs de grande capacité.

D'autres buts et avantages de la présente invention seront rendus évidents par la description de certaines de ses formes d'exécution qui va être faite ci-après à l'aide du dessin annexé dans lequel :
- la figure 1 représente schématiquement et partiellement, à tire d'exemple non limitatif, une forme d'exécution du véhicule selon la présente invention;
- la figure 2 est un tableau résumant le fonctionnement de certains composants du véhicule de la figure 1;
- la figure 3 est un diagramme représentant schématiquement la puissance mécanique maximale fournie par un moteur à carburant en fonction de sa vitesse de rotation;
- la figure 4 illustre le fonctionnement du véhicule de la figure 1;
- la figure 5 représente schématiquement et partiellement, toujours à tire d'exemple non limitatif, une autre forme d'exécution du véhicule selon la présente invention;
- la figure 6 est un diagramme représentant schématiquement la puissance mécanique fournie par un moteur à carburant en fonction de sa vitesse de rotation pour diverses valeurs d'un signal de commande;
- la figure 7 est un tableau résumant le fonctionnement de certains composants du véhicule de la figure 5;
- la figure 8 illustre le fonctionnement du véhicule de la figure 5;
- la figure 9 représente schématiquement et partiellement, toujours à titre d'exemple non limitatif, une autre forme d'exécution du véhicule selon la présente invention;
- la figure 10 illustre le fonctionnement du véhicule de la figure 9;
- la figure 11 représente schématiquement et partiellement, toujours à titre d'exemple non limitatif, une autre forme d'exécution du véhicule selon la présente invention; et
- la figure 12 représente schématiquement des moyens de commande utilisables dans un véhicule selon la présente invention.

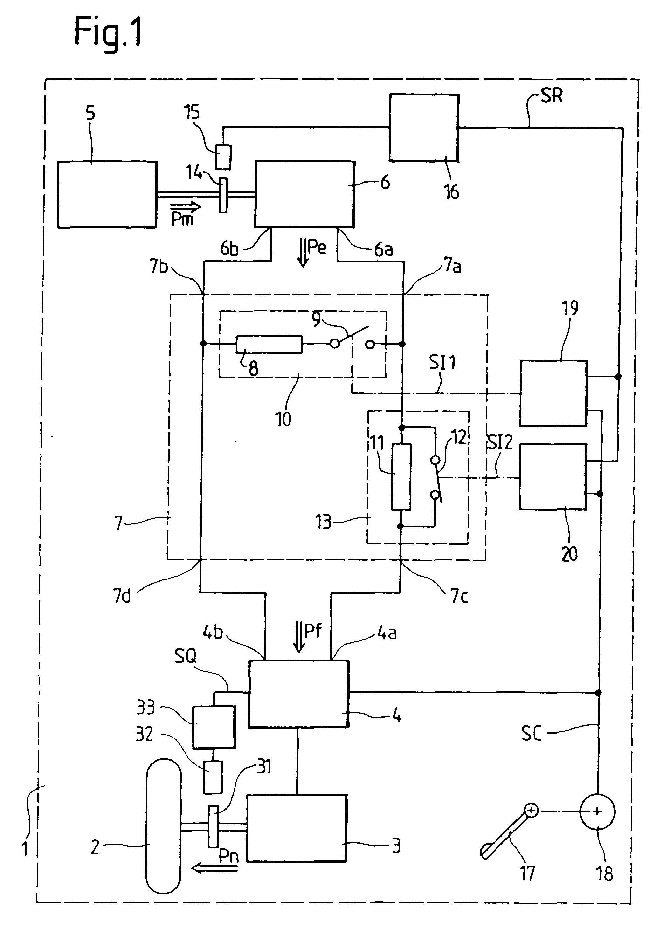

Dans sa forme d'exécution représentée schématiquement et partiellement à la figure 1, le véhicule selon la présente invention, désigné par la référence générale 1, comporte une roue motrice 2 reliée mécaniquement au rotor, non représenté séparément d'un moteur électrique 3. Ce moteur 3 peut être du même type que n'importe lequel des divers moteurs électriques bien connus utilisables pour entraîner une roue motrice d'un véhicule et ne sera donc pas décrit plus en détail.

Dans la figure 1, la roue 2 et le moteur 3 ont été représentés séparément et leur liaison mécanique a été symbolisée par un double trait. Mais il est évident que cette roue 2 et ce moteur 3 peuvent également être accolés l'un à l'autre. De même, la liaison entre cette roue 2 et le rotor de ce moteur 3 peut être directe, comme cela a été représenté, ou être réalisée par l'intermédiaire d'un train d'engrenages ou de tout autre moyen similaire.

Le véhicule 1 comporte encore un dispositif fournissant un signal de mesure SQ représentatif de la vitesse de rotation du moteur 3. Ce dispositif peut comporter, comme cela a été représenté dans la figure 1, un disque 31 fixé concentriquement à l'arbre reliant le moteur 3 à la roue 2, un capteur 32, photo-électrique ou magnétique, produisant des impulsions en réponse au passage, devant lui, de dents ou de trous, non représentés, disposés régulièrement à la périphérie du disque 31, et un circuit électronique 33 fournissant le signal SQ en réponse aux impulsions produites par le capteur 32. Ces divers composants du dispositif de mesure de la vitesse de rotation du moteur 3 ne seront pas décrits plus en détail car ils sont bien connus des spécialistes, ce dispositif de mesure pouvant d'ailleurs être réalisé de nombreuses autres manières également bien connues.

Le véhicule 1 comporte encore un circuit de commande 4 qui est destiné à transmettre au moteur 3, sous une forme adaptée à la nature de ce dernier, de l'énergie électrique qu'il reçoit d'une manière qui sera précisée plus loin.

Le circuit de commande 4 ne sera pas décrit en détail, car sa structure dépend évidemment de la nature du moteur 3 ainsi que de la forme sous laquelle il reçoit l'énergie électrique mentionnée ci-dessus. On mentionnera simplement que ce circuit de commande 4 comporte, dans le présent exemple, deux bornes d'entrée 4a et 4b, et qu'il est agencé de manière à régler la puissance électrique qu'il fournit au moteur 3 en fonction de la valeur d'un signal de consigne SC qu'il reçoit d'un dispositif qui sera décrit plus loin et de la valeur du signal SQ représentatif de la vitesse de rotation de ce moteur 3.

Dans la figure 1, la liaison entre ce circuit de commande 4 et ce moteur 3 a été symbolisée par un simple trait bien qu'elle soit évidemment constituée par plusieurs conducteurs dont le nombre est au moins égal à deux et dépend de la nature du moteur 3.

Le véhicule 1 comporte encore un moteur à carburant 5, c'est-à-dire un moteur produisant de l'énergie mécanique en réponse à la combustion d'un carburant. Un tel moteur peut être, par exemple, un moteur à explosion, un moteur Diesel, une turbine à gaz, etc.

L'arbre de sortie du moteur 5 est relié au rotor, non représenté séparément, d'un générateur d'énergie électrique 6 par une liaison mécanique symbolisée par un double trait.

Le moteur 5 et le générateur 6 ont aussi été représentés séparément, mais il est évident qu'ils peuvent également être accolés l'un à l'autre. De même, la liaison mécanique entre l'arbre de sortie du moteur 5 et le rotor du générateur 6 peut être directe, comme cela a été représenté, ou être réalisée par l'intermédiaire d'un train d'engrenages ou de tout autre dispositif similaire.

Le stator du générateur 6, qui n'a pas non plus été représenté séparément, comporte dans le présent exemple deux bornes de sortie 6a et 6b. Comme cela sera rendu évident plus loin, la tension produite par le générateur 6 entre ces bornes 6a et 6b lorsque le moteur 5 entraîne son rotor en rotation peut être continue ou alternative, le circuit de commande 4 du moteur 3 étant bien entendu adapté en conséquence.

La puissance électrique fournie par le générateur 6 est transférée au circuit de commande 4 par un circuit de réglage de puissance 7 ayant deux bornes d'entrée 7a et 7b reliées respectivement aux bornes 6a et 6b du générateur 6 et deux bornes de sortie 7c et 7d reliées respectivement aux bornes 4a et 4b du circuit de commande 4 du moteur électrique 3.

Le circuit de réglage 7 comporte une première résistance 8 et un premier interrupteur 9 branchés en série l'un avec l'autre et formant ensemble un premier élément de réglage 10 branché en parallèle entre les bornes 7a et 7b.

Le circuit de réglage 7 comporte également une deuxième résistance 11 et un deuxième interrupteur 12 branchés en parallèle l'un avec l'autre et formant ensemble un deuxième élément de réglage 13 branché en série entre les bornes 7a et 7c.

En outre, les bornes 7b et 7d du circuit de réglage 7 sont directement reliées l'une à l'autre.

Les interrupteurs 9 et 12 ont été représentés dans la figure 1 sous la forme de simples contacts, mais il est évident qu'il sont de préférence constitués par des éléments électroniques tels que des transistors ou des thyristors.

Quelle que soit la manière dont ils sont réalisés, ces interrupteurs 9 et 12 sont respectivement commandés par des signaux SI1 et SI2 pouvant prendre chacun deux états distincts, et ils sont agencés de manière à être ouverts ou fermés selon que leur signal de commande respectif SI1 ou SI2 est dans son premier ou son deuxième état.

Ainsi, dans la situation représentée à la figure 1, le signal SI1 est dans son premier état et l'interrupteur 9 est ouvert, et le signal SI2 est dans son deuxième état et l'interrupteur 12 est fermé.

Ces signaux SI1 et SI2 sont produits par des circuits qui seront décrits plus loin et respectivement appliqués aux interrupteurs 9 et 12 par des liaisons symbolisées par des traits mixtes.

Le véhicule 1 comporte encore un dispositif fournissant un signal de mesure SR représentatif de la vitesse de rotation R du moteur à carburant 5. Ce dispositif peut comporter, comme cela a été représenté dans la figure 1, un disque 14 fixé concentriquement à l'arbre reliant le moteur 5 au générateur 6, un capteur 15, photo-électrique ou magnétique, produisant des impulsions en réponse au passage, devant lui, de dents ou de trous, non représentés, disposés régulièrement à la périphérie du disque 14, et un circuit électronique 16 fournissant le signal SR en réponse aux impulsions produites par le capteur 15. Ces divers composants du dispositif de mesure de la vitesse de rotation R du moteur 5 ne seront pas décrits plus en détail car ils sont bien connus des spécialistes, ce dispositif de mesure pouvant d'ailleurs être réalisé de nombreuses autres manières également bien connues.

On mentionnera simplement ici que ce dispositif de mesure de la vitesse de rotation R du moteur 5 est agence de manière que le signal SR ait une valeur minimale SRm lorsque ce moteur 5 tourne à sa vitesse minimale, qui est la vitesse en dessous de laquelle il risque de s'arrêter et à laquelle la puissance mécanique qu'il fournit est pratiquement nulle, et que ce signal SR ait une valeur maximale SRM lorsque ce moteur 5 tourne à sa vitesse maximale, c'est-à-dire à la vitesse qu'il ne doit pas dépasser sous peine de subir des dégâts.

Le véhicule 1 comporte également une pédale d'accélérateur 17, semblable à la pédale d'accélérateur d'un véhicule classique, qui est reliée mécaniquement, par une liaison symbolisée par un trait mixte, à un capteur 18 fournissant un signal SC représentatif de la position de cette pédale 17. Ce signal SC est celui qui a été mentionné ci-dessus dans la description du circuit de commande 4 du moteur 3.

Le capteur 18 ne sera pas décrit en détail car il s'agit d'un élément bien connu qui peut d'ailleurs être réalisé de diverses manières. On mentionnera simplement ici que ce capteur 18 est agencé de manière que le signal SC ait une valeur minimale SCm lorsque la pédale 17 est dans la position qu'elle prend lorsque le conducteur du véhicule 1 ne la touche pas, et que ce signal SC ait une valeur maximale SCM lorsque le conducteur du véhicule 1 appuie cette pédale 17 contre sa butée de fin de course.

Pour une raison qui sera rendue évidente plus loin, il est nécessaire que le dispositif de mesure de la vitesse de rotation R du moteur 5 et le capteur 18 soient agencés de manière que les signaux SR et SC soient de même nature. Par exemple, chacun de ces deux signaux peut être constitué par une tension électrique. De même, il est nécessaire que ce dispositif et ce capteur soient agencés de manière que les valeurs minimales SRm et SCm de ces signaux SR et SC soient au moins sensiblement égales, ainsi que les valeurs maximales SRM et SCM de ces deux signaux SR et SC. En outre, il est préférable mais pas obligatoire que le signal SC varie au moins sensiblement linéairement entre sa valeur minimale SCm et sa valeur maximale SCM en fonction de la position de la pédale d'accélérateur 17.

Les signaux SI1 et SI2 mentionnés ci-dessus, qui sont les signaux de commande des interrupteurs 9 et 12, sont respectivement produits par un premier circuit comparateur 19 et par un deuxième circuit comparateur 20. Ces comparateurs 19 et 20 ont chacun une première entrée reliée au circuit 16 et recevant donc le signal SR, une deuxième entrée reliée au capteur 18 et recevant donc le signal SC, et une sortie fournissant le signal SI1 ou, respectivement, SI2.

Le circuit comparateur 19 est agencé de manière que le signal SI1 soit dans son premier état lorsque la valeur du signal SR est inférieure ou égale à celle du signal SC, et que ce signal SI1 soit dans son deuxième état lorsque la valeur de ce signal SR est supérieure à celle de ce signal SC.

Le circuit comparateur 20 est agencé de manière que le signal SI2 soit dans son premier état lorsque la valeur du signal SR est inférieure à celle du signal SC, et que ce signal SI2 soit dans son deuxième état lorsque la valeur de ce signal SR est supérieure ou égale à celle de ce signal SC.

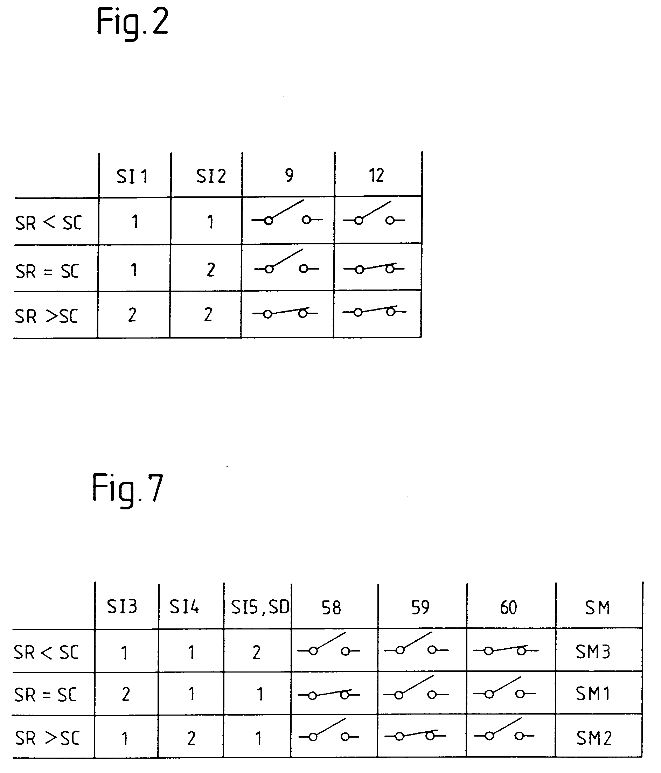

Ce fonctionnement des comparateurs 19 et 20 est résumé dans le tableau de la figure 2 qui indique les états des signaux SI1 et SI2 ainsi que les états correspondants des interrupteurs 9 et 12 dans les trois cas possibles, c'est-à-dire dans les cas où le signal SR est respectivement inférieur, égal ou supérieur au signal SC. Dans ce tableau, les chiffres 1 et 2 indiquent que le signal dont la référence figure au haut de la colonne est dans son premier et, respectivement, dans son deuxième état.

Les comparateurs 19 et 20 ne seront pas décrits plus en détail car de tels circuits sont bien connus des spécialistes. En outre, leur constitution dépend évidemment de la nature des signaux SR et SC qu'ils reçoivent sur leurs entrées et de la nature des signaux SI1 et SI2 qu'ils doivent fournir aux interrupteurs 9 et 12 pour ouvrir ou fermer ces derniers.

Avant de commencer la description du fonctionnement du véhicule 1, on rappellera que, dans tout véhicule automobile, de quelque type qu'il soit, la puissance mécanique fournie par le moteur de traction est réglée, par des moyens adéquats dont la nature dépend de celle de ce moteur, à une valeur de consigne déterminée par la position de la pédale d'accélérateur du véhicule. En d'autres termes, à chaque position de la pédale d'accélérateur correspond une puissance mécanique de consigne, et les moyens de réglage de la puissance mécanique fournie par le moteur agissent sur ce dernier de manière que la puissance mécanique qu'il fournit effectivement devienne ou reste égale à cette puissance mécanique de consigne.

Dans le cas du véhicule 1, chaque valeur du signal SC, qui est représentatif de la position de la pédale d'accélérateur 17, correspond donc à une valeur particulière d'une puissance mécanique de consigne, qui sera désignée par la référence Pc, et la puissance mécanique fournie par le moteur 3 à la roue 2 est réglée, comme cela sera décrit plus loin, de manière que sa valeur devienne ou reste égale à la valeur de cette puissance mécanique de consigne Pc, quelle que soit cette dernière valeur.

Pour une raison qui sera rendue évidente plus loin, le dispositif, non représenté séparément, qui alimente le moteur 5 en carburant et, le cas échéant, en comburant est agencé, dans le présent exemple, de manière que ce moteur 5 produise toujours la puissance maximale qu'il peut produire à la vitesse à laquelle il tourne, quelle que soit cette dernière. Ainsi dans le cas où ce moteur à carburant 5 est un moteur à explosion alimenté par un carburateur classique, cette condition est réalisée en bloquant le papillon de ce carburateur dans sa position d'ouverture maximale, ou en supprimant complètement ce papillon.

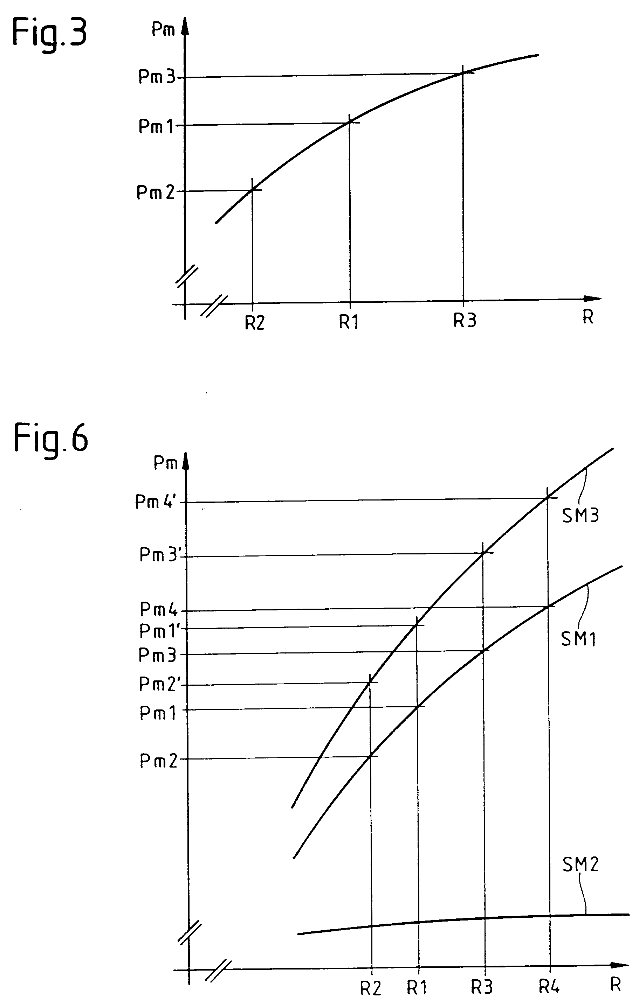

La figure 3 représente schématiquement la variation bien connue de la puissance mécanique Pm produite dans ces conditions par le moteur 5 en fonction de sa vitesse de rotation R. Il faut noter que, puisque la puissance mécanique Pm produite par le moteur 5 est toujours égale à la puissance mécanique maximale qu'il peut produire, quelle que soit sa vitesse de rotation R, le signal SR représentatif de cette vitesse de rotation R est également représentatif de cette puissance Pm.

Pour une autre raison, qui sera également rendue évidente plus loin, le dispositif de mesure de la vitesse de rotation R du moteur 5, formé dans le présent exemple par le disque 14, le capteur 15 et le circuit électronique 16, est de préférence agencé de manière que le signal SR, dont on vient de voir qu'il est également représentatif de la puissance mécanique Pm fournie par ce moteur 5, varie au moins sensiblement linéairement entre sa valeur minimale SRm et sa valeur maximale SRM en fonction de cette puissance Pm.

La puissance mécanique Pm produite par le moteur à carburant 5 lorsque le véhicule 1 est en mouvement est transformée en puissance électrique par le générateur 6. Cette dernière puissance électrique, qui sera appelée puissance électrique Pe dans la suite de cette description, est transmise au circuit de commande 4 du moteur 3, totalement ou partiellement comme on le verra plus loin, par le circuit de réglage 7. La puissance électrique transmise par ce dernier au circuit de commande 4 sera appelée puissance électrique Pf dans la suite de cette description. Gette puissance électrique Pf est transmise au moteur 3, par le circuit de commande 4, sous une forme adaptée à la nature de ce moteur 3, et transformée par ce dernier en puissance mécanique, qui sera appelée puissance mécanique Pn dans la suite de cette description. Cette puissance mécanique Pn est évidemment utilisée par la roue motrice 2 pour faire avancer le véhicule 1. Ces puissances Pm, Pe, Pf et Pn ont été symbolisées par des flèches dans la figure 1.

Une partie de la puissance mécanique Pm est dissipée dans le générateur 6, de sorte que la puissance électrique Pe fournie par ce dernier a une valeur légèrement inférieure à celle de cette puissance mécanique Pm.

De même, une partie de la puissance électrique Pf fournie par le circuit de réglage 7 au circuit de commande 4 est dissipée dans ce dernier et dans le moteur électrique 3, de sorte que la puissance mécanique Pn produite par ce dernier a une valeur légèrement inférieure à celle de cette puissance électrique Pf.

Mais ces puissances dissipées lors de ces transformations sont généralement faibles par rapport à la puissance mécanique Pm fournie par le moteur 5 et, respectivement, par rapport à la puissance électrique absorbée par le moteur 3, de sorte qu'elles seront négligées dans la description du fonctionnement du véhicule l qui va suivre. Le spécialiste verra d'ailleurs sans difficulté comment dimensionner les divers éléments du véhicule 1 pour tenir compte, si nécessaire, de ces puissances dissipées dans le générateur 6, dans le circuit de commande 4 et dans le moteur 3.

Pour ne pas compliquer inutilement la description du fonctionnement du véhicule 1 qui va suivre, on admettra donc dans cette description que la puissance électrique Pe fournie par le générateur 6 est égale à la puissance mécanique Pm produite par le moteur à carburant 5, et que la puissance mécanique Pn fournie par le moteur électrique 3 à la roue motrice 2 est égale à la puissance électrique Pf que le circuit de commande 4 de ce moteur 3 reçoit du circuit de réglage 7.

On admettra encore que, à l'instant où commence cette description du fonctionnement du véhicule 1, le signal SC a une valeur SC1 intermédiaire entre sa valeur minimale SCm et sa valeur maximale SCM, et que cette valeur SC1 n'a pas varié depuis un certain temps. Cette valeur SC1 du signal SC correspond à une valeur Pc1 de la puissance de consigne Pc, c'est-à-dire de la puissance mécanique Pn que le moteur électrique 3 doit fournir à la roue 2.

Dans ces conditions, et comme cela sera rendu évident plus loin, le moteur à carburant 5 tourne à une vitesse R1 qui est justement celle à laquelle la valeur Pm1 de la puissance mécanique Pm qu'il produit est égale à la valeur Pc1 de la puissance de consigne Pc.

La valeur SR1 du signal SR correspondant à cette vitesse de rotation R1 du moteur 5 et à cette puissance mécanique Pm1 est donc égale à la valeur SC1 du signal SC.

Le signal SI1 produit par le comparateur 19 est donc dans son premier état, de sorte que l'interrupteur 9 est ouvert, alors que le signal SI2 produit par le comparateur 20 est dans son deuxième état, de sorte que l'interrupteur 12 est fermé. Le circuit de réglage 7 est donc dans l'état représenté à la figure 1 où la résistance 8 n'est pas connectée et où la résistance 11 est court-circuitée.

La valeur Pf1 de la puissance électrique Pf fournie par le circuit de réglage 7 au circuit de commande 4 est donc égale à la valeur Pe1 de la puissance électrique Pe produite par le générateur 6, qui est elle-même égale à la valeur Pm1 de la puissance mécanique Pm produite par le moteur 5, et donc à la valeur Pc1 de la puissance de consigne Pc.

Il en découle que la valeur Pn1 de la puissance mécanique fournie par le moteur électrique 3 est aussi égale à cette valeur Pc1 de cette puissance mécanique de consigne Pc.

Il faut noter que, dans cette situation, le couple moteur créé par le moteur à carburant 5 est égal au couple de freinage créé par le générateur 6, de sorte que la vitesse de rotation R de ce moteur 5 reste constante.

Cette situation reste inchangée tant que le conducteur du véhicule 1 ne modifie pas la position de la pédale 17 et que la valeur du signal SC reste donc égale à SC1.

Lorsque le conducteur du véhicule 1 diminue, par exemple, la pression qu'il exerce sur la pédale 17, le signal SC prend une nouvelle valeur SC2 inférieure à la valeur SC1 qu'il avait précédemment et correspondant à une nouvelle valeur Pc2 de la puissance de consigne Pc, également inférieure à la valeur précédente Pc1 de cette puissance de consigne Pc.

Comme cela sera rendu évident plus loin, cette diminution du signal SC n'as pas d'effet immédiat sur la vitesse de rotation R du moteur à carburant 5, et donc sur la valeur du signal SR qui reste égale à SR1. Le signal SC est donc maintenant inférieur au signal SR, de sorte que le circuit comparateur 19 met le signal SI1 dans son deuxième état, ce qui provoque la fermeture de l'interrupteur 9. Par contre, le circuit comparateur 20 ne modifie pas le signal SI2, qui reste dans son deuxième état, l'interrupteur 12 restant donc fermé.

La fermeture de l'interrupteur 9 a pour effet de brancher la résistance 8 en parallèle avec le générateur 6 et le circuit de commande 4, et donc d'augmenter le couple de freinage créé par le générateur 6, qui devient supérieur au couple moteur créé par le moteur à carburant 5.

La vitesse de rotation R de ce moteur 5 et la puissance mécanique Pm qu'il fournit diminuent donc d'autant plus rapidement que la valeur de la résistance 8 est faible.

Lorsque cette vitesse de rotation R atteint la valeur R2 pour laquelle le signal SR a une valeur SR2 égale à la nouvelle valeur SC2 du signal SC, le circuit comparateur 19 redonne au signal SI1 son premier état, de sorte que l'interrupteur 9 s'ouvre à nouveau et que la liaison de la résistance 8 avec le générateur 6 est interrompue.

En outre, la valeur Pm2 de la puissance mécanique Pm fournie par le moteur 5 est maintenant égale à la nouvelle valeur Pc2 de la puissance de consigne Pc puisque la valeur SR2 du signal SR est maintenant égale à la valeur SC2 du signal SC.

Comme de plus l'interrupteur 9 est maintenant ouvert et que l'interrupteur 12 est toujours fermé, le véhicule 1 est dans une situation stable semblable à celle qui a été décrite ci-dessus, c'est-à-dire une situation où les puissances Pm, Pe, Pf et Pn sont toutes égales à la puissance de consigne Pc déterminée par la position de la pédale 17, la seule différence entre ces deux situations étant la valeur de cette puissance de consigne Pc et donc celle de ces puissances Pm, Pe, Pf et Pn.

Cette situation reste inchangée tant que le conducteur du véhicule 1 ne modifie pas la position de la pédale 17.

Si le conducteur du véhicule 1 augmente alors, toujours par exemple, la pression qu'il exerce sur la pédale 17, le signal SC prend une nouvelle valeur SC3 supérieure à la valeur précédente SC2 et correspondant à une nouvelle valeur Pc3 de la puissance de consigne Pc, qui est également supérieure à la valeur précédente Pc2 de cette puissance de consigne Pc.

Cette augmentation du signal SC n'as pas non plus d'effet immédiat sur la vitesse de rotation R du moteur à carburant 5, et la valeur du signal SR reste donc égale à SR2.

Le signal SC est donc maintenant supérieur au signal SR, de sorte que le circuit comparateur 20 met le signal SI2 dans son premier état, ce qui provoque l'ouverture de l'interrupteur 12. Par contre, le circuit comparateur 19 ne modifie pas le signal SI1, qui reste dans son premier état, l'interrupteur 9 restant donc ouvert.

L'ouverture de l'interrupteur 12 a pour effet de brancher la résistance 11 en série entre le générateur 6 et le circuit de commande 4, et donc de diminuer le couple de freinage créé par le générateur 6, qui devient inférieur au couple moteur créé par le moteur à carburant 5.

La vitesse de rotation R de ce moteur 5 et la puissance mécanique Pm qu'il fournit augmentent donc d'autant plus rapidement que la valeur de la résistance 11 est élevée.

Lorsque cette vitesse de rotation R atteint la valeur R3 pour laquelle le signal SR a une valeur SR3 égale à la nouvelle valeur SC3 du signal SC, le circuit comparateur 20 redonne au signal SI2 son deuxième état, de sorte que l'interrupteur 12 se ferme et court-circuite à nouveau la résistance 11.

En outre, la valeur Pm 3 de la puissance mécanique Pm fournie par le moteur 5 est maintenant égale à la nouvelle valeur Pc3 de la puissance de consigne Pc puisque la valeur SR3 du signal SR est maintenant égale à la valeur SC3 du signal SC.

Comme de plus l'interrupteur 12 est maintenant fermé et que l'interrupteur 9 est toujours ouvert, le véhicule 1 est à nouveau dans une situation stable semblable à celles qui ont été décrites ci-dessus, c'est-à-dire une situation où les puissances Pm, Pe, Pf et Pn sont toutes égales à la puissance de consigne Pc déterminée par la position de la pédale 17, la seule différence entre la situation présente et les situations précédentes étant la valeur de cette puissance de consigne Pc et donc celle de ces puissances Pm, Pe, Pf et Pn.

Cette situation reste inchangée tant que le conducteur du véhicule 1 ne modifie pas la position de la pédale 17 et que la valeur du signal SC reste donc égale à SC3.

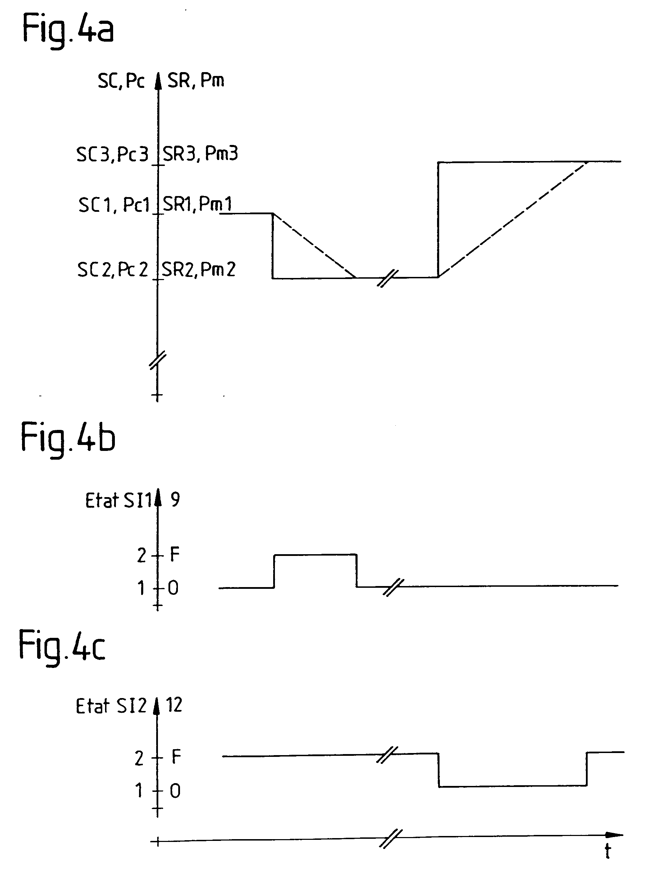

La figure 4 illustre schématiquement le déroulement en fonction du temps t des divers processus décrits ci-dessus.

Dans cette figure 4, le diagramme a) représente par un trait continu le signal SC et la puissance de consigne Pc correspondante ainsi que, par un trait interrompu, le signal SR représentatif de la vitesse de rotation R du moteur 5 et la puissance mécanique Pm fournie par ce moteur 5. Comme on l'a vu ci-dessus, le signal SR et la puissance mécanique Pm ne sont respectivement différents du signal SC et de la puissance de consigne Pc que pendant les laps de temps pendant lesquels cette puissance mécanique Pm varie en réponse à une variation de ce signal SC. C'est pourquoi le trait interrompu représentant le signal SR et la puissance Pm n'est visible que pendant ces laps de temps. Il faut noter que les variations du signal SR et de la puissance Pm ne sont en général pas linéaires comme cela a été représenté dans un but de simplification.

Les diagrammes b) et c) de la figure 4 représentent respectivement les états du signal SI1 et de l'interrupteur 9, et les états du signal SI2 et de l'interrupteur 12. Dans ces diagrammes b) et c), les références 1 et 2 désignent respectivement le premier et le deuxième état des signaux SI1 et SI2, et les références O et F désignent respectivement l'état ouvert et l'état fermé des interrupteurs 9 et 12.

Il est évident qu'un processus semblable à l'un de ceux qui viennent d'être décrits se déroule chaque fois que le conducteur du véhicule 1 modifie la position de la pédale d'accélérateur 17.

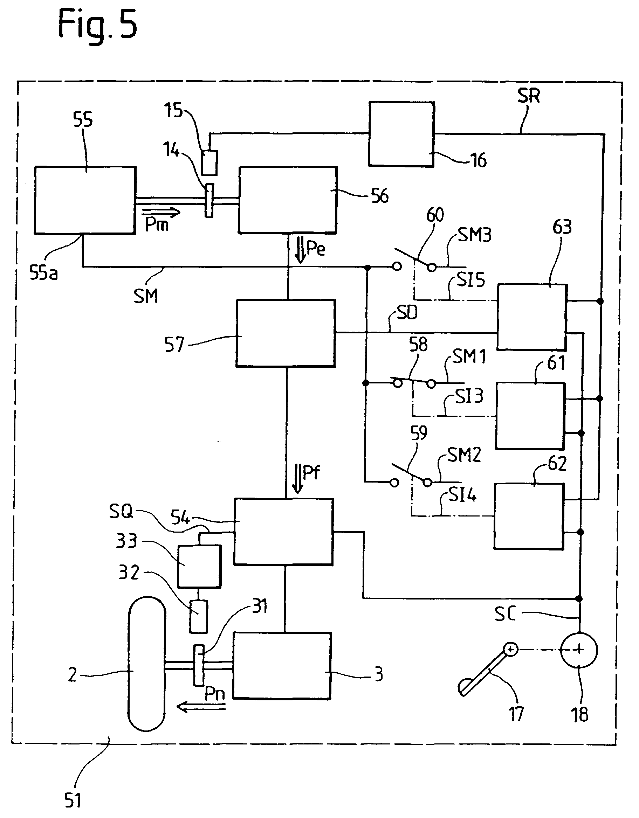

La figure 5 représente schématiquement et partiellement une autre forme d'exécution du véhicule selon la présente invention, qui est désigné par la référence générale 51.

Comme le véhicule 1 de la figure 1, le véhicule 51 comporte une roue motrice 2, un moteur électrique 3 d'entraînement de cette roue 2, une pédale d'accélérateur 17 et un capteur 18 produisant un signal SC représentatif de la position de cette pédale 17 et donc de la puissance de consigne Pc que le moteur 3 doit transmettre à la roue 2. Ces éléments et ce signal sont identiques aux éléments et au signal désignés par les mêmes références dans la figure 1 et ne seront donc pas décrits à nouveau ici.

Le véhicule 51 comporte encore un circuit de commande 54 du moteur 3 dont le rôle est semblable à celui du circuit 4 de la figure 1 et qui ne sera donc pas non plus décrit à nouveau. On mentionnera cependant que, dans cet exemple, l'énergie électrique que le circuit 54 reçoit d'une manière qui sera décrite plus loin lui est fournie sous une tension continue, et que ce circuit 54 est bien entendu agencé en conséquence.

Il faut noter ici que les liaisons électriques entre les divers éléments mentionnés ci-dessus ou qui seront mentionnés plus loin ont été symbolisées par un simple trait dans la figure 5, même si ces liaisons sont constituées par plusieurs conducteurs comme c'est évidemment le cas, par exemple, pour la liaison entre le circuit de commande 54 et le moteur 3.

Le véhicule 51 comporte encore un moteur à carburant 55 qui, comme le moteur 5 du véhicule 1, peut être du même type que n'importe lequel des moteurs bien connus utilisant la combustion d'un carburant pour produire de l'énergie mécanique. Cependant, le dispositif d'alimentation en carburant du moteur 55, qui n'a pas été représenté séparément, est agencé, contrairement à celui du moteur 5, de manière à régler la quantité de carburant qu'il fournit à ce moteur 55, et donc la puissance mécanique Pm produite par ce dernier à chacune de ses vitesses de rotation, en fonction de la valeur d'un signal SM appliqué sur une borne 55a et qui sera décrit plus loin.

Le véhicule 51 comporte également un générateur 56 produisant une énergie électrique sous une tension alternative lorsque son rotor, qui n'a pas été représenté séparément, est entraîné en rotation par l'arbre de sortie du moteur 55 auquel il est relié mécaniquement.

Les bornes de sortie du générateur 56, qui n'ont pas non plus été représentées séparément et dont le nombre dépend de la nature monophasée ou polyphasée de la tension alternative produite par ce générateur 56, sont reliées aux entrées d'un convertisseur 57 qui est destiné à fournir la tension continue nécessaire au fonctionnement du circuit de commande 54 du moteur 3 mentionné ci-dessus.

Le convertisseur 57 ne sera pas décrit en détail car il s'agit d'un circuit bien connu des spécialistes. On mentionnera simplement ici qu'il est agencé de manière à transmettre au circuit de commande 54 la totalité de la puissance électrique qu'il reçoit du générateur 56 lorsqu'un signal de commande SD, qui sera décrit plus loin, est dans un premier état, et à ne transmettre à ce circuit de commande 54 qu'une partie de cette puissance électrique lorsque ce signal SD est dans un deuxième état.

Le signal SM déjà mentionné, dont la valeur détermine la puissance mécanique fournie par le moteur 55 à chacune de ses vitesses de rotation, est produit par un circuit formé, dans le présent exemple, de trois interrupteurs 58, 59 et 60 et de trois comparateurs 61, 62 et 63.

Une première borne de chacun des interrupteurs 58 à 60 est reliée à la borne 55a du moteur 55 dont on a vu ci-dessus qu'elle est destinée à recevoir le signal SM.

Une source, non représentée, fournit à la deuxième borne de l'interrupteur 58 un signal de valeur fixe SM1, à la deuxième borne de l'interrupteur 59 un autre signal de valeur fixe SM2, et à la deuxième borne de l'interrupteur 60 un troisième signal de valeur fixe SM3.

Pour une raison qui sera rendue évidente plus loin, la valeur SM1 est celle que le signal SM doit avoir pour que le moteur 55 fournisse, quelle que soit sa vitesse de rotation, une puissance mécanique égale à une fraction déterminée de sa puissance mécanique maximale, cette fraction étant égale à 80% dans le présent exemple mais pouvant bien entendu avoir une valeur différente.

De même, la valeur SM2 est celle que le signal SM doit avoir pour que le moteur 55 ne fournisse qu'une puissance mécanique inférieure à celle qu'il fournit lorsque le signal SM a la valeur SM1 mentionnée ci-dessus. Dans le présent exemple, cette valeur SM2 est celle que le signal SM doit avoir pour que le moteur 55 ne fournisse pratiquement plus de puissance mécanique, tout en continuant cependant à tourner.

En outre, la valeur SM3 est celle que le signal SM doit avoir pour que le moteur 55 fournisse une puissance mécanique supérieure à celle qu'il fournit lorsque le signal SM a la valeur SM1 mentionnée ci-dessus. Dans le présent exemple, cette valeur SM3 est celle que le signal SM doit avoir pour que le moteur 55 fournisse sa puissance mécanique maximale quelle que soit sa vitesse de rotation.

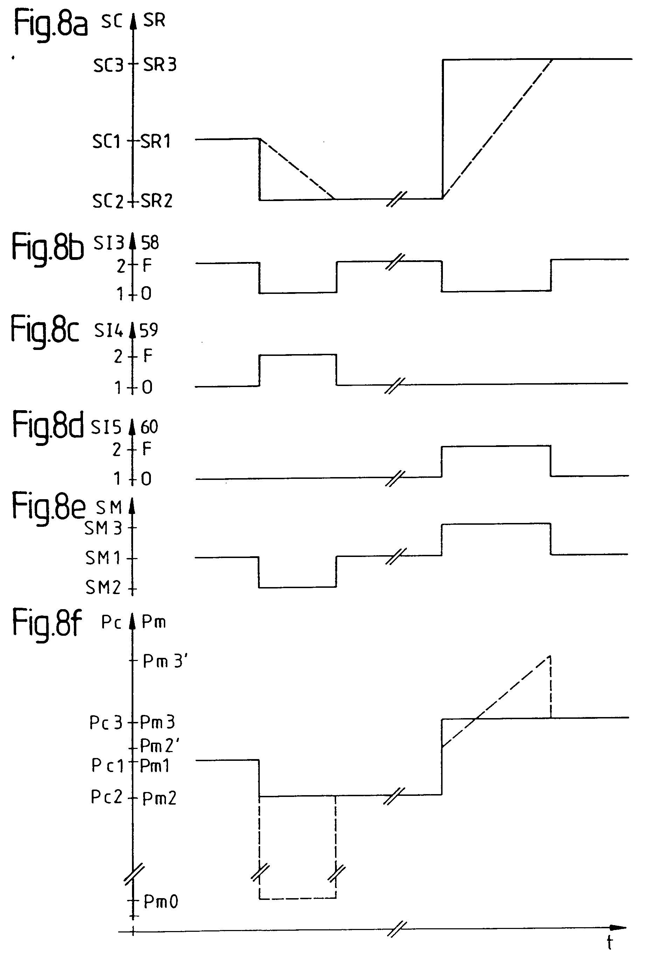

La figure 6 représente schématiquement la variation de la puissance mécanique Pm fournie par le moteur 55 en fonction de sa vitesse de rotation R pour ces trois valeurs SM1, SM2 et SM3 du signal SM.

Les interrupteurs 58 à 60 ont été représentés dans la figure 5 sous la forme de simples contacts, mais il est évident qu'ils sont de préférence constitués par des éléments électroniques tels que des transistors ou des thyristors.

Quelle que soit la manière dont ils sont réalisés, les interrupteurs 58, 59 et 60 sont respectivement commandés par des signaux SI3, SI4 et SI5 pouvant prendre chacun deux états distincts, et ils sont agencés de manière à être ouverts ou fermés selon que leur signal de commande respectif est dans son premier ou son deuxième état.

Ainsi, dans la situation représentée à la figure 6, le signal SI3 est dans son deuxième état et l'interrupteur 58 est donc fermé, alors que les signaux SI4 et SI5 sont dans leur premier état et que les interrupteurs 59 et 60 sont donc ouverts.

Les signaux SI3 à SI5, qui sont appliqués aux interrupteurs 58 à 60 par des liaisons symbolisées par des traits mixtes, sont respectivement produits par trois circuits comparateurs 61, 62 et 63 ayant chacun une première entrée reliée au circuit 16 et recevant donc le signal SR, et une deuxième entrée reliée au capteur 18 et recevant donc le signal SC.

Le signal SD mentionné ci-dessus, qui est destiné à commander le convertisseur 57, est également produit par le comparateur 63.

Le comparateur 61 est agencé de manière que le signal SI3 soit dans son premier état lorsque les valeurs des signaux SR et SC sont différentes l'une de l'autre et dans son deuxième état lorsque ces valeurs des signaux SR et SC sont égales l'une à l'autre.

Le comparateur 62 est agencé de manière que le signal SI4 soit dans son premier état lorsque la valeur du signal SR est inférieure ou égale à celle du signal SC et dans son deuxième état lorsque la valeur de ce signal SR est supérieure à celle de ce signal SC.

Le comparateur 63 est agencé de manière que les signaux SI5 et SD soient dans leur premier état lorsque la valeur du signal SR est supérieure ou égale à celle du signal SC et dans leur deuxième état lorsque la valeur de ce signal SR est inférieure à celle de ce signal SC.

Ce fonctionnement des comparateurs 61 à 63 est résumé dans le tableau de la figure 7 qui indique les états des signaux SI3 à SI5 et SD, les états des interrupteurs 58 à 60 et la valeur du signal SM dans les trois cas possibles, c'est-à-dire dans les cas où le signal SR est respectivement inférieur, égal ou supérieur au signal SC.

Dans ce tableau, les chiffres 1 et 2 indiquent que le signal dont la référence figure au haut de la colonne est dans son premier et, respectivement, dans son deuxième état.

Les comparateurs 61 à 63 ne seront pas décrits plus en détail car de tels circuits sont bien connus des spécialistes. En outre, leur constitution dépend évidemment de la nature des signaux SR et SC qu'ils reçoivent sur leurs entrées, de la nature des signaux SI3 à SI5 qu'ils doivent fournir aux interrupteurs 58 à 60 pour ouvrir ou fermer ces derniers et, pour le comparateur 63, de la nature du signal SD qu'il doit fournir au convertisseur 57 pour commander ce dernier de la manière mentionnée ci-dessus.

L'ensemble constitué par les interrupteurs 58 à 60 et par les comparateurs 61 à 63 peut être considéré comme formant un sélecteur donnant sélectivement au signal SM l'une des valeurs SM1 à SM3 en fonction de la valeur relative des signaux SR et SC.

Dans la description du fonctionnement du véhicule 51 qui va suivre, on désignera également par Pm la puissance mécanique fournie par le moteur à carburant 55, par Pe la puissance électrique fournir par le générateur 56, par Pf la puissance électrique fournie au circuit de commande 54, dans ce cas par le convertisseur 57, et par Pn la puissance mécanique fournie par le moteur électrique 3 à la roue 2. Ces diverses puissances sont également symbolisées par des flèches dans la figure 5. En outre, on négligera également les pertes dans les divers éléments concernés, et l'on admettra donc que les valeurs des puissances Pm et Pe sont égales, de même que les valeurs des puissances Pf et Pn.

Le véhicule 51 comporte encore un dispositif produisant un signal représentatif de la vitesse de rotation R du moteur 55, qui sera également appelé signal SR. Ce dispositif produisant ce signal SR est constitué d'éléments semblables aux éléments 14 à 16 du véhicule 1, désignés par les mêmes références que ces derniers et qui ne seront donc pas décrits à nouveau. On mentionnera cependant que, dans le véhicule 51, ces éléments 14 à 16, et notamment le circuit électronique 16, sont agencés de manière que le signal SR a toujours une valeur égale à celle du signal SC lorsque le moteur 55 fournit une puissance mécanique Pm égale, d'une part, a la puissance de consigne Pc correspondant à cette valeur du signal SC et, d'autre part, à une fraction prédéterminée de la puissance maximale, qu'il peut fournir à la vitesse à laquelle il tourne.

Dans la description du fonctionnement du véhicule 1 qui sera faite ci-après, on admettra, à titre d'exemple non limitatif, que la fraction prédéterminée mentionnée ci-dessus est égale à 80%, ce qui signifie que lorsque le signal SM à sa valeur SM1 mentionnée ci-dessus, qui est justement celle pour laquelle le moteur 55 fournit, quelle que soit sa vitesse de rotation R, une puissance mécanique égale au 80% de sa puissance maximale, et que le signal SR a une valeur égale à celle du signal SC, le moteur 55 fournit une puissance mécanique Pm égale à la puissance de consigne Pc correspondant à cette valeur du signal SC.

Comme dans la description du fonctionnement du véhicule 1 faite ci-dessus, on admettra que, à l'instant où commence cette description du fonctionnement du véhicule 51, le conducteur de ce dernier a maintenu depuis un certain temps la pédale d'accélérateur 17 dans une position stable intermédiaire entre ses positions extrêmes. Le signal SC a donc également une valeur stable correspondant à une valeur stable de la puissance de consigne Pc. Ces deux valeurs seront aussi respectivement appelées SC1 et Pc1.

Dans ces conditions, et comme cela sera rendu évident plus loin, le moteur à carburant 55 tourne à la vitesse, qui sera aussi appelée R1, pour laquelle le signal SR a une valeur SR1 égale à la valeur SC1 du signal SC.

Le signal SI3 fourni par le comparateur 61 a donc son deuxième état et l'interrupteur 58 est fermé, de sorte que le signal SM a la valeur SM1. La puissance mécanique Pm fournie par le moteur 55 a donc une valeur Pm1 égale au 80% de la puissance maximale Pm1' que peut fournir ce moteur 55 à cette vitesse R1, et cette valeur Pm1 est égale à la valeur Pc1 de la puissance de consigne Pc correspondant à la valeur SC1 du signal SC.

En outre, le signal SD est dans son premier état, de sorte que la valeur Pf1 de la puissance électrique Pf fournie par le convertisseur 57 au circuit de commande 54 du moteur 3 est égale à la valeur Pe1 de la puissance électrique Pe que ce convertisseur 57 reçoit du générateur 56, qui est elle-même égale à la valeur Pm1 de la puissance mécanique Pm fournie par le moteur 55.

La valeur Pn1 de la puissance mécanique Pn fournie par le moteur 3 à la roue 2 étant égale à la valeur Pf1 de la puissance électrique Pf fournie par le convertisseur 57 au circuit de commande 54, cette valeur Pn1 est aussi égale à la valeur Pc1 de la puissance de consigne Pc.

Cette situation reste stable tant que le conducteur du véhicule 51 ne modifie pas la position de la pédale d'accélérateur 17.

Lorsque le conducteur du véhicule 51 diminue, par exemple, la pression qu'il exerce sur la pédale 17, le signal SC prend une nouvelle valeur SC2 inférieure à la valeur SC1 qu'il avait précédemment et correspondant à une nouvelle valeur Pc2 de la puissance de consigne Pc, également inférieure à la valeur précédente Pc1 de cette puissance de consigne Pc.

Comme dans le cas du véhicule 1, cette diminution du signal SC n'a pas d'effet immédiat sur la vitesse de rotation R du moteur à carburant 55, et donc sur la valeur du signal SR qui reste égale à SR1.

Le signal SC est donc maintenant inférieur au signal SR, de sorte que le comparateur 61 met le signal SI3 dans son premier état, ce qui a pour effet d'ouvrir l'interrupteur 58, et que le comparateur 62 met le signal SI4 dans son deuxième état, ce qui a pour effet de fermer l'interrupteur 59.

Le signal SM prend donc la valeur SM2 pour laquelle la puissance mécanique Pm fournie par le moteur 55 devient pratiquement nulle.

La vitesse de rotation R du moteur 55 diminue donc rapidement, jusqu'à ce que le signal SR atteigne une valeur SR2 égale à la nouvelle valeur SC2 du signal SC.

A ce moment, le comparateur 62 redonne au signal SI4 sa première valeur et le comparateur 61 redonne au signal SI3 sa deuxième valeur, de sorte que la valeur du signal SM redevient égale à SM1.

La valeur Pm2 de la puissance mécanique Pm que le moteur 55 fournit alors est à nouveau égale à 80% de sa puissance mécanique maximale, et cette valeur Pm2 est en outre égale à la nouvelle valeur Pc2 de la puissance de consigne Pc.

Le véhicule 51 se trouve donc à nouveau dans une situation stable semblable à celle qui a été décrite ci-dessus, c'est-à-dire une situation où les puissances Pm, Pe, Pf et Pn sont toutes égales à la puissance de consigne Pc déterminée par la position de la pédale 17, la seule différence entre ces deux situations étant la valeur de cette puissance de consigne Pc et donc celle de ces puissances Pm, Pe, Pf et Pn.

Cette situation reste évidemment inchangée tant que le conducteur du véhicule 51 ne modifie pas la position de la pédale 17 et que la valeur du signal SC reste donc égale à SC2.

Si le conducteur du véhicule 51 augmente alors, toujours par exemple, la pression qu'il exerce sur la pédale 17, le signal SC prend une nouvelle valeur supérieure à la valeur précédente SC2 et correspondant à une nouvelle valeur Pc3 de la puissance de consigne Pc, qui est également supérieure à la valeur Pc2.

Cette augmentation du signal SC n'a pas non plus d'effet immédiat sur la vitesse de rotation R du moteur à carburant 55, et la valeur du signal SR reste donc égale à SR2.

Le signal SC est donc maintenant supérieur au signal SR, de sorte que le comparateur 61 redonne au signal SI3 sa première valeur, ce qui a pour effet d'ouvrir l'interrupteur 59, et que le comparateur 63 donne au signal SI5 sa deuxième valeur, ce qui a pour effet de fermer l'interrupteur 60. Le signal SM prend donc la valeur SM3, et la puissance mécanique fournie par le moteur 55 prend la valeur Pm2' qui est sa valeur maximale à la vitesse R2 à laquelle ce moteur 55 tourne à ce moment.

Simultanément, le comparateur 63 donne au signal SD sa deuxième valeur, de sorte que la puissance électrique absorbée par le convertisseur 57 diminue.

Le couple de freinage créé par le générateur 56 diminue donc également. Comme en outre le moteur 55 fournit maintenant sa puissance maximale, sa vitesse de rotation R augmente rapidement, de même que la valeur du signal SR.

Lorsque cette vitesse de rotation R atteint la valeur R3 pour laquelle le signal SR a une valeur égale à la nouvelle valeur SC3 du signal SC, le comparateur 63 redonne au signal SI5 son premier état, et le comparateur 61 redonne au signal SI3 son deuxième état. Il en résulte que l'interrupteur 60 s'ouvre à nouveau alors que l'interrupteur 58 se ferme à nouveau, de sorte que le signal SM reprend la valeur SM1.

La puissance mécanique Pm fournie par le moteur 55, qui avait atteint la valeur Pm3', diminue alors et prend la valeur Pm3 égale à 80% de cette valeur Pm3', et cette valeur Pm3 est en outre égale à la nouvelle valeur Pc3 de la puissance de consigne Pc.

Simultanément, le comparateur 63 redonne au signal SD son premier état, de sorte que le convertisseur 57 recommence à transmettre au circuit de commande 54 du moteur électrique 3 la totalité de la puissance électrique Pe qu'il reçoit du générateur 56.

Le véhicule 51 est donc à nouveau dans une situation stable où les puissances Pm, Pe, Pf et Pn sont toutes égales à la puissance de consigne Pc déterminée par la position de la pédale 17, la seule différence entre cette situation et celles qui ont été décrites ci-dessus étant la valeur de cette puissance de consigne Pc et donc celle de ces puissances Pm, Pe, Pf et Pn.

Cette situation reste inchangée tant que le conducteur du véhicule 51 ne modifie pas la position de la pédale 17 et que la valeur du signal SC reste donc égale à SC3.

La figure 8 illustre schématiquement le déroulement en fonction du temps t des divers processus qui viennent d'être décrits.

Dans cette figure 8, le diagramme a) représente par un trait continu le signal SC et par un trait interrompu le signal SR représentatif de la vitesse de rotation R du moteur 55. Comme dans le cas du véhicule 1 décrit ci-dessus, le signal SR n'est différent du signal SC que pendant les laps de temps pendant lesquels la vitesse de rotation R du moteur 55 varie en réponse à une variation de ce signal SC. C'est pourquoi le trait interrompu représentant le signal SR n'est visible que pendant ces laps de temps.

Les diagrammes b), c) et d) représentent respectivement les états du signal SI3 et de l'interrupteur 58, du signal SI4 et de l'interrupteur 59, et du signal SI5 et de l'interrupteur 60. Dans ces diagrammes b), c) et d), les références 1 et 2 désignent respectivement le premier et le deuxième état des signaux SI3 à SI5, et les références O et F désignent respectivement l'état ouvert et l'état fermé des interrupteurs 58 à 60.

Le diagramme e) de la figure 8 représente le signal SM, et le diagramme f) représente par un trait continu la puissance de consigne Pc correspondant au signal SC et par un trait interrompu la puissance mécanique Pm fournie par le moteur 55.

Comme on l'a également vu ci-dessus, cette puissance mécanique Pm n'est différente de la puissance de consigne Pc que pendant les laps de temps pendant lesquels cette puissance mécanique Pm varie en réponse à une variation du signal SC. C'est pourquoi le trait interrompu représentant cette puissance mécanique Pm n'est visible que pendant ces laps de temps. Dans ce diagramme f), la référence PmO désigne la valeur de la puissance mécanique Pm que fournit le moteur 55 lorsque le signal SM a sa valeur SM2.

Il est évident qu'un processus semblable à l'un de ceux qui viennent d'être décrits se déroule chaque fois que le conducteur du véhicule 51 modifie la position de la pédale d'accélérateur 17.

Il faut relever que, dans le véhicule 1, la vitesse de rotation R du moteur à carburant 5 est réglée en modifiant uniquement la puissance électrique fournie par le générateur 6 alors que, dans le véhicule 51, la vitesse de rotation R du moteur à carburant 55 est réglée non seulement en modifiant la puissance électrique fournie par le générateur 56 mais, en plus, en agissant sur le dispositif d'alimentation en carburant de ce moteur 55. Il en résulte que, après chaque modification de la position de la pédale 17 et toutes autres choses étant égales, le moteur 55 du véhicule 51 atteint sa nouvelle vitesse de rotation plus rapidement que le moteur 5 du véhicule 1.

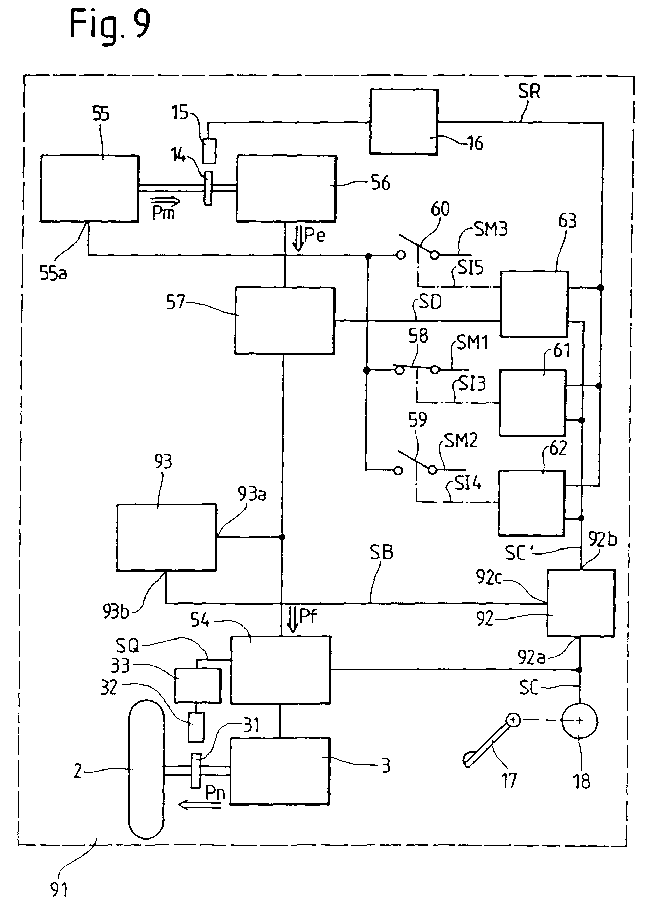

La figure 9 représente schématiquement et partiellement une autre forme d'exécution du véhicule selon la présente invention, qui est désigné par la référence 91.

Les éléments du véhicule 91 qui sont désignés par les mêmes références que les éléments du véhicule 51 de la figure 5 sont identiques à ces derniers et ne seront pas décrits à nouveau.

Ces éléments du véhicule 91 sont reliés entre eux comme les éléments correspondants du véhicule 51, à l'exception du capteur 18 qui n'est plus relié directement aux deuxièmes entrées des comparateurs 61 à 63, mais qui est relié à l'entrée 92a d'un circuit additionneur commandable 92 dont le fonctionnement sera décrit plus loin, ces deuxièmes entrées des comparateurs 61 à 63 étant reliées à la sortie 92b de cet additionneur 92.

Cette sortie 92b de l'additionneur 92 produit un signal SC' qui sera également décrit plus loin.

Le véhicule 91 comporte en outre une source d'énergie électrique 93 dont un exemple sera décrit plus loin.

On mentionnera simplement ici que la source 93 est capable d'emmagasiner une certaine quantité d'énergie électrique et de restituer cette dernière sous une tension continue sensiblement égale à la tension continue produite par le convertisseur 57. En outre, les deux bornes de la source 93 entre lesquelles apparaît cette tension continue, qui n'ont pas été représentées séparément, sont respectivement reliées aux bornes correspondantes du convertisseur 57 et du circuit de commande 54. On mentionnera encore que la source 93 comporte des moyens, non représentés séparément, qui produisent, à une sortie 93b, un signal de détection SB représentatif de la quantité d'énergie électrique Q contenue dans cette source 93. Ces moyens sont agencés de manière que, lorsque cette quantité d'énergie électrique Q diminue et devient égale ou inférieure à une première quantité prédéterminée Q1, ce signal SB passe d'un premier à un deuxième état, et que lorsque cette quantité d'énergie électrique Q augmente et devient égale ou supérieure à une deuxième quantité prédéterminée Q2 supérieure à la quantité Q1, ce signal SB passe de son deuxième état à son premier état.

Ce signal SB est appliqué à une entrée de commande 92c de l'additionneur 92, et ce dernier est agencé de manière que le signal SC' mentionné ci-dessus soit égal au signal SC lorsque ce signal SB est dans son premier état, et supérieur d'une quantité prédéterminée à ce signal SC lorsque le signal SB est dans son deuxième état.

L'additionneur 92 ne sera pas décrit en détail car sa réalisation ne pose pas de problème particulier à l'homme du métier.

Tant que la quantité d'énergie Q contenue dans la source 93 est supérieure à la quantité prédéterminée Q1 mentionnée ci-dessus, le fonctionnement du véhicule 91 est identique à celui du véhicule 51 décrit ci-dessus puisque le signal SB est alors dans son premier état et que le signal SC' est donc égal au signal SC. Ce fonctionnement ne sera donc pas décrit à nouveau en détail.

On rappellera simplement que lorsque la valeur du signal SC, dans le cas du véhicule 51, ou du signal SC', dans la cas du véhicule 91, est supérieure à la valeur du signal SR, le comparateur 63 met notamment le signal SD dans son deuxième état, ce qui a pour effet que le convertisseur 57 ne transmet plus au circuit de commande 54 qu'une partie de la puissance électrique Pe qu'il reçoit du générateur 56. La valeur de cette partie sera appelée Pe' dans la suite de cette description.

Dans le cas du véhicule 51, lorsque le signal SC passe d'une valeur SC2 à une valeur plus élevée SC3 comme dans l'exemple décrit ci-dessus, et tant que le signal SD est dans son deuxième état, la puissance mécanique Pn fournie par le moteur 3 à la roue 2, qui est égale à la puissance électrique reçue par le circuit de commande 54, a donc la valeur Pe', qui est évidemment inférieure à la valeur Pc3 de la puissance de consigne Pc correspondant à la nouvelle valeur SC3 du signal SC.

Par contre, dans le cas du véhicule 91 et dans les mêmes circonstances que ci-dessus, la source d'énergie électrique 93 fournit au circuit de commande 54 une puissance électrique dont la valeur, qui sera appelée Pe'', est égale à la différence entre la valeur Pc3 de la puissance de consigne Pc et la valeur Pe' de la puissance électrique que le convertisseur 57 transmet encore à ce circuit de commande 54. La valeur de la puissance mécanique Pn fournie par le moteur 3 à la roue 2 devient donc immédiatement égale à la nouvelle valeur Pc3 de la puissance de consigne Pc dès que la valeur du signal de consigne SC passe de SC2 à SC3.

Suite à cette fourniture de la puissance électrique Pe'' au circuit de commande 54, la quantité d'énergie électrique Q contenue dans la source 93 diminue.

Si, au moment où la valeur du signal SC passe de SC2 à SC3, cette quantité d'énergie électrique Q est supérieure à la quantité prédéterminée Q1 mentionnée ci-dessus, le signal SB a sa première valeur et le signal SC', qui est égal au signal SC, a donc la même valeur SC3 que ce dernier.

Si en outre, cette quantité d'énergie électrique Q ne devient pas égale ou inférieure à cette quantité prédéterminée Q1 avant que la vitesse de rotation R du moteur 55 atteigne la valeur R3, le signal SC' garde cette valeur SC3 et un processus identique à celui qui a été décrit dans le cas du véhicule 51 se déroule lorsque cette vitesse de rotation R atteint cette valeur R3. Ce processus ne sera pas décrit à nouveau.

Si, par contre, cette quantité d'énergie électrique Q devient égale ou inférieure à la quantité prédéterminée Q1 avant que la vitesse de rotation R atteigne la valeur R3, le signal SB prend son deuxième état, et le signal SC' prend une nouvelle valeur SC4 supérieure à la valeur SC3 du signal SC.

Dans un tel cas, ce n'est évidemment que à l'instant où la vitesse de rotation R du moteur 55 atteint une valeur R4 pour laquelle le signal SR a une valeur SR4 égale à la valeur SC4 du signal SC' que les signaux SI5 et SD reprennent leur premier état et que le signal SI3 reprend son deuxième état, avec les mêmes conséquences que celles qui ont été décrites ci-dessus.

Depuis cet instant, le moteur 55 fournit une puissance mécanique Pm ayant une valeur Pm4 qui est égale au 80% de la puissance mécanique maximale Pm4' qu'il peut fournir à cette vitesse R4.

Cette valeur Pm4 de la puissance mécanique Pm est évidemment supérieure à la valeur Pc3 de la puissance de consigne Pc correspondant à la valeur SC3 du signal SC, et il en est donc de même de la valeur Pe4 de la puissance électrique Pe fournie par le générateur 56, qui est égale à cette valeur Pm4.

Comme le signal SD est maintenant dans son premier état, la puissance électrique fournie par le convertisseur 57 a aussi une valeur égale à Pe4. Mais la valeur de la puissance électrique que le circuit de commande 54 peut absorber n'est égale qu'à la valeur Pc3 de la puissance de consigne Pc correspondant à la valeur SC3 du signal SC. La différence entre la puissance électrique fournie par le convertisseur 57 et celle qui est absorbée par le circuit de commande 54 est alors absorbée par la source 93, et la quantité d'énergie électrique Q contenue dans celle-ci augmente.

Lorsque cette quantité d'énergie électrique Q atteint la quantité prédéterminée Q2, le signal SB reprend son premier état, et la valeur du signal SC' redevient égale à celle du signal SC, c'est-à-dire à SC3.

Cette valeur SC3 du signal SC' étant inférieure à la valeur SR4 du signal SR, le comparateur 61 remet le signal SI3 dans son premier état et le comparateur 62 met le signal SI4 dans son deuxième état, ce qui a comme conséquence que la vitesse de rotation R du moteur 55 diminue rapidement comme cela a été décrit ci-dessus.

Lorsque cette vitesse de rotation R atteint la valeur R3 et que la valeur du signal SR devient donc égale à la valeur SC3 du signal SC', le comparateur 62 remet le signal SI4 dans son premier état et le comparateur 61 remet le signal SI3 dans son deuxième état.

A partir de cet instant, le moteur 55 fournit à nouveau une puissance mécanique Pm ayant une valeur Pm3 égale, d'une part, à la valeur Pc3 de la puissance de consigne Pc correspondant à la valeur SC3 du signal SC et, d'autre part, au 80% de la puissance maximale Pm3' que ce moteur 55 peut fournir à cette vitesse de rotation R3, et cette situation reste inchangée tant que le conducteur du véhicule 91 ne modifie pas la position de la pédale d'accélérateur 17.

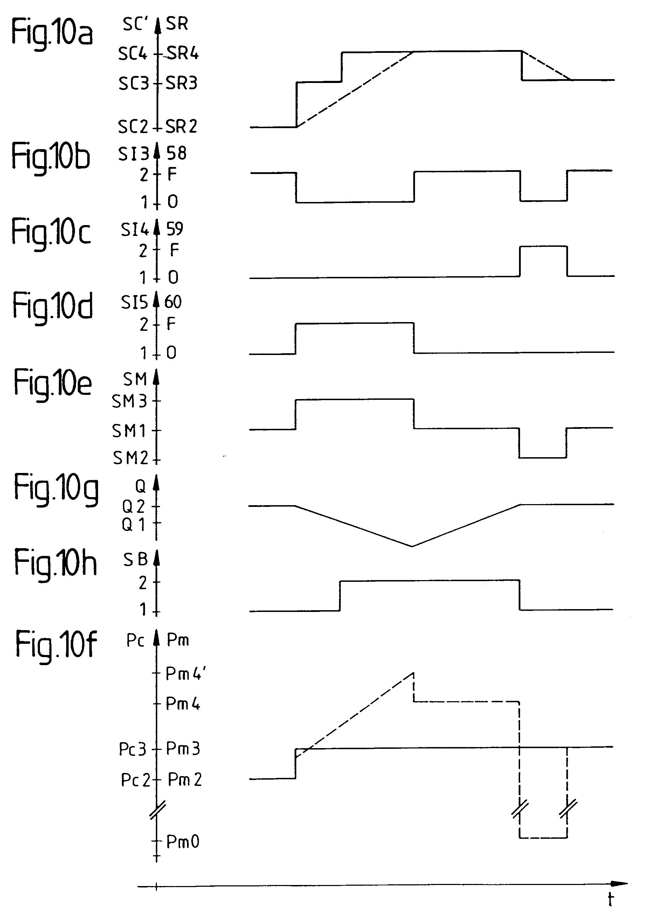

La figure 10 illustre schématiquement le déroulement du processus qui vient d'être décrit en fonction du temps t.

Dans cette figure 10, le diagramme a) représente par un trait continu le signal SC' et par un trait interrompu le signal SR, et les diagrammes b) à f) représentent les mêmes signaux ou les mêmes grandeurs que les diagrammes désignés par les mêmes références dans la figure 8. En outre, dans cette figure 10, les diagrammes g) et h) représentent respectivement la quantité d'énergie électrique Q contenue dans la source 93 et le signal SB, le premier et le deuxième état de ce dernier étant respectivement repérés par les références 1 et 2.

Les valeurs R4, Pm4 et Pm4' mentionnées ci-dessus ont également été indiquées dans la figure 6.

Il ressort de la description du fonctionnement du véhicule 91 qui a été faite ci-dessus que la source 93 ne fournit de l'énergie électrique au circuit de commande 54 que lorsque le signal SD est dans son deuxième état, c'est-à-dire pendant le temps où la vitesse de rotation du moteur 55 augmente suite à une augmentation de la valeur du signal SC.

Mais cette augmentation de cette vitesse de rotation R est très rapide et ne dure, au plus, que quelques secondes. En outre, pendant cette augmentation de cette vitesse de rotation R, la source 93 ne doit fournir qu'une partie de la puissance électrique absorbée par le circuit de commande 54. La quantité d'énergie électrique que la source 93 doit pouvoir contenir peut donc être considérablement plus faible que celle que doit contenir la batterie équipant les véhicules connus décrits ci-dessus.

La source d'énergie électrique rechargeable 93 peut donc être constituée par un simple condensateur, par exemple un condensateur électrolytique, ou, si nécessaire, par un ensemble formé de plusieurs condensateurs.

Cette source 93 peut également être constituée par une simple batterie d'accumulateurs classiques, au plomb ou au cadmium-nickel par exemple.

Dans certains cas, cependant, la tension continue nécessaire au fonctionnement du circuit de commande 54 est relativement élevée, de l'ordre de quelques centaines de volts. Une batterie d'accumulateurs classiques fournissant une telle tension est encombrante et chère. Dans de tels cas, la source 93 est donc de préférence constituée par la combinaison d'une batterie d'accumulateurs classiques fournissant une tension relativement basse, par exemple 12 volts, d'un élévateur de tension fournissant la tension élevée nécessaire à partir de cette basse tension, et d'un circuit capable de recharger cette batterie, lorsque cela est nécessaire, à partir de la tension élevée produite par le convertisseur 57. Une telle source d'énergie n'a pas été représentée et ne sera pas décrite plus en détail car sa réalisation ne pose pas de problème particulier à l'homme du métier.

La batterie d'accumulateurs que comporte la source 93 dans les exemples qui viennent d'être décrits ayant une capacité considérablement plus faible que celle de la batterie qui équipe les véhicules connus, tous les inconvénients mentionnés ci-dessus, qui sont dus à la présence d'une batterie d'accumulateurs dans un véhicule, sont donc aussi considérablement réduits.

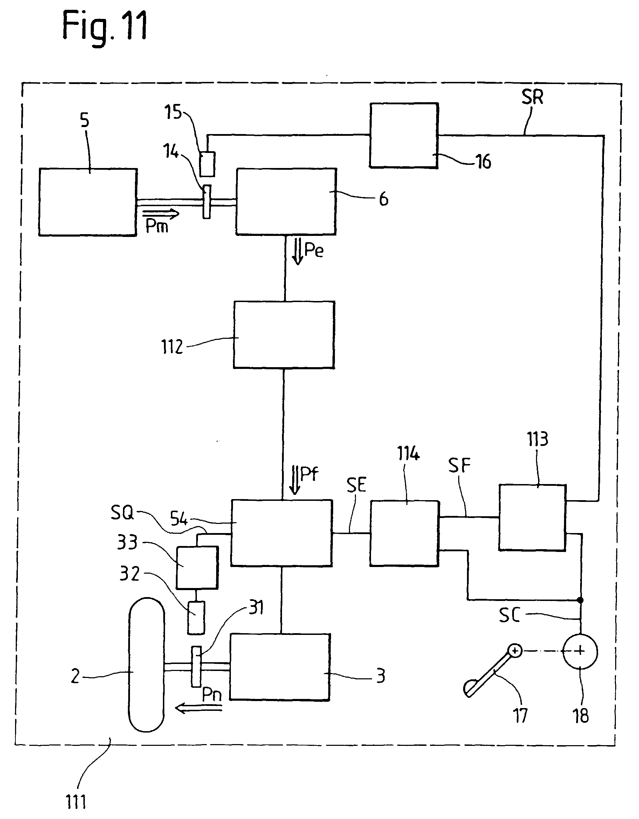

La figure 11 représente schématiquement et partiellement une autre forme d'exécution du véhicule selon l'invention, qui est désigné par la référence 111.

Les éléments 2, 3, 5, 6, 14 à 18 et 31 à 33 du véhicule 111 sont identiques aux éléments désignés par les mêmes références dans la figure 1 et ne seront donc pas décrits à nouveau.

On rappellera simplement que le dispositif qui alimente le moteur 5 en carburant est agencé de manière que ce dernier fournisse toujours la puissance mécanique maximale qu'il peut fournir à la vitesse à laquelle il tourne, quelle que soit cette dernière.

Le véhicule 111 comporte en outre un circuit de commande du moteur électrique 3 qui est désigné par la référence 54 car il est identique au circuit de commande désigné par la même référence dans le schéma de la figure 5. Ce circuit de commande 54 ne sera pas décrit à nouveau ici sinon pour mentionner que son signal de commande, dont la valeur détermine la puissance électrique qu'il fournit au moteur 3, est désigné par la référence SE dans cet exemple.

La tension continue nécessaire au fonctionnement du circuit de commande 54 lui est fournie par un convertisseur 112 dont les entrées sont reliées au générateur 6.

Le convertisseur 112 ne sera pas décrit en détail car il peut être réalisé de diverses manières bien connues. On mentionnera simplement qu'il est agencé de manière à transmettre en permanence au circuit de commande 54 toute la puissance électrique absorbée par ce dernier, contrairement au convertisseur 57 du véhicule 51 représenté à la figure 5, et ne comporte donc pas d'entrée destinée à recevoir un signal tel que le signal SD de commande de ce convertisseur 57.

Le véhicule 111 comporte encore un circuit de calcul 113 dont les entrées reçoivent respectivement le signal SR représentatif de la vitesse de rotation R du moteur 5 et le signal SC représentatif de la position de la pédale d'accélérateur 17 et donc de la puissance de consigne Pc.

Ce circuit de calcul 113 est agencé de manière que le signal SF qu'il fournit est égal au produit de la différence entre les signaux SR et SC par un facteur supérieur à un. Ainsi, le signal SF est respectivement nul, positif ou négatif selon que le signal SR est égal, supérieur ou inférieur au signal SC, et la valeur absolue de ce signal SF est toujours supérieure à celle de la différence des signaux SR et SC lorsque ceux-ci ne sont pas égaux.

Le signal SF est appliqué à la première entrée d'un circuit additionneur 114 dont la deuxième entrée reçoit le signal SC et dont la sortie fournit le signal SE mentionné ci-dessus. Ce signal SE est donc égal, supérieur ou inférieur au signal SC selon que le signal SF est nul, positif ou négatif. En outre, lorsque les signaux SR et SC ne sont pas égaux, la valeur absolue de la différence entre les signaux SE et SC est supérieure à celle de la différence entre les signaux SR et SC.

Le fonctionnement du véhicule 111 ne sera pas décrit dans tous les détails car il découle facilement des explications données ci-dessus.

On voit en effet que lorsque le signal SR est égal au signal SC, le signal SF est nul et le signal SE est égal au signal SC. Le véhicule 111 se trouve donc dans une situation stable où les puissances Pm, Pe, Pf et Pn sont égales entre elles, aux pertes près, et égales à la puissance de consigne Pc correspondant à la valeur du signal SC déterminée par la position de la pédale d'accélérateur 17.

Si alors le conducteur de ce véhicule 111 diminue la pression qu'il exerce sur la pédale 17, le signal SC prend une nouvelle valeur inférieure à la précédente et donc à celle du signal SR.

Le signal SF produit par le circuit de calcul 113 devient donc positif, et le signal SE augmente malgré la diminution du signal SC. La puissance électrique Pf absorbée par le circuit de commande 54 du moteur 3 augmente donc, de même bien entendu que la puissance électrique Pe fournie par le générateur 6.

Il en résulte que le couple de freinage exercé par le générateur 6 sur le moteur 5 augmente, de sorte que la vitesse de rotation R de ce dernier diminue.

Lorsque cette vitesse de rotation R atteint la valeur pour laquelle le signal SR est à nouveau égal au signal SC, le signal SF redevient nul et le signal SE redevient égal au signal SC. Le véhicule 111 est donc à nouveau dans une situation stable où les puissances Pm, Pe, Pf et Pn sont égales à la puissance de consigne Pc correspondant à la nouvelle valeur du signal SC.

Si maintenant le conducteur du véhicule 111 augmente la pression qu'il exerce sur la pédale 17, le signal SC prend une nouvelle valeur supérieure à la précédente et donc à celle du signal SR.

Le signal SF devient donc négatif, et le signal SE diminue malgré l'augmentation du signal SC. La puissance électrique Pf absorbée par le circuit de commande 54 diminue donc, de même que la puissance électrique Pe fournie par le générateur 6.

Il en résulte que le couple de freinage exercé par le générateur 6 sur le moteur 5 diminue, de sorte que la vitesse de rotation R de ce dernier augmente.

Lorsque cette vitesse de rotation R atteint la valeur pour laquelle le signal SR est à nouveau égal au signal SC, le signal SF redevient nul et le signal SE redevient égal au signal SC. Le véhicule 111 est donc à nouveau dans une situation stable où les puissances Pm, Pe, Pf et Pn sont égales à la puissance de consigne Pc correspondant à la nouvelle valeur du signal SC.

On voit que dans le véhicule 111, comme dans le véhicule de la figure 1 décrit ci-dessus, la vitesse de rotation R du moteur à carburant 5 est réglée uniquement en modifiant temporairement la puissance électrique que le générateur 6 doit fournir, cette puissance étant respectivement diminuée ou augmentée selon que cette vitesse de rotation doit augmenter ou diminuer. En outre, le moteur 5 fournit en permanence la puissance mécanique maximale qu'il peut fournir à la vitesse à laquelle il tourne et fonctionne donc en permanence dans des conditions où son rendement est maximal.

Dans les véhicules 51 et 91 des figures 5 et 9 décrits ci-dessus, la vitesse de rotation R du moteur à carburant 5 n'est pas seulement réglée en modifiant temporairement la puissance électrique Pe que le générateur 6 doit fournir, mais également en modifiant la quantité de carburant et/ou de comburant fourni à ce moteur 5 par son dispositif d'alimentation. Néanmoins, ce moteur 5 fonctionne la plupart du temps dans des conditions où il fournit une puissance mécanique qui est relativement proche de sa puissance maximale et qui est une fraction fixe et déterminée de cette dernière. Les caractéristiques de ce moteur 5 peuvent donc être choisies de manière que son rendement soit maximal lorsqu'il fonctionne dans ces conditions.

En résumé, on voit que, dans le véhicule selon la présente invention dont certaines formes d'exécution viennent d'être décrites, le moteur à carburant fonctionne en permanence, et que sa vitesse de rotation est réglée à la valeur pour laquelle la puissance mécanique Pm qu'il fournit est égale, d'une part, à la puissance de consigne Pc déterminée par la position de la pédale d'accélérateur 17 du véhicule et, d'autre part, à une fraction prédéterminée de la puissance mécanique maximale qu'il peut fournir à cette vitesse, cette fraction prédéterminée pouvant être égale à 100% dans certaines formes d'exécution.

Ce sont ces caractéristiques qui donnent au véhicule selon la présente invention les avantages mentionnés ci-dessus, c'est-à-dire qui permettent d'éviter d'avoir à le munir d'une batterie d'accumulateurs capable de fournir toute l'énergie électrique nécessaire à son fonctionnement.

On a constaté que, en pratique, un conducteur modifie très souvent la position de la pédale d'accélérateur de son véhicule, même s'il ne désire pas changer la vitesse de celui-ci. Ces modifications, qui sont dans la plupart des cas inconscientes et de faible amplitude, ont pour effet, dans un véhicule selon la présente invention, que la valeur du signal SC produit par le capteur de position 18 de la position de la pédale d'accélérateur 17 varie également très souvent et ne reste que rarement constante pendant un temps appréciable, sauf bien entendu lorsque cette pédale 17 est complètement relâchée ou complètement enfoncée.

Or, on a vu ci-dessus que, dans un véhicule selon la présente invention tel que ceux qui sont représentés par les figures 1, 5 et 11, la puissance électrique Pf fournie au circuit de commande 4 ou 54 du moteur de traction 3 diminue temporairement en réponse à chaque augmentation, même faible, du signal SC. On a également vu que, dans un véhicule selon la présente invention tel que ceux qui sont représentés par les figures 1 et 11, cette puissance électrique Pf augmente en outre temporairement en réponse à chaque diminution, même faible, du signal SC.

Il découle de ce qui précède que, même lorsque le conducteur d'un véhicule selon la présente invention ne désire pas modifier la vitesse de celui-ci, la puissance électrique Pf fournie au circuit de commande 4 ou 54 du moteur de traction 3 peut varier assez souvent. Il en est évidemment de même de la puissance électrique fournie par ce circuit de commande 4 ou 54 au moteur de traction 3, et donc de la puissance mécanique Pn fournie par ce moteur 3 à la roue 2.

Ces variations de cette puissance mécanique Pn ont un effet semblable à celui qui est produit, dans un véhicule muni d'une boîte de vitesses automatique, par le changement du rapport de transmission de celle-ci et ne sont donc généralement pas ressenties comme étant particulièrement gênantes par le conducteur d'un véhicule selon la présente invention et/ou par ses passagers.

Il serait évidemment possible de supprimer ces variations de la puissance mécanique Pn dues aux petits déplacements de la pédale d'accélérateur 17 mentionnés ci-dessus en intercalant un filtre passe-bas entre le capteur 18 et les divers circuits recevant le signal SC.

Mais il est bien connu que le signal de sortie d'un filtre passe-bas ne varie qu'avec un certain retard en réponse aux variations du signal d'entrée de ce filtre, et que ce retard est d'autant plus important que la fréquence de coupure de ce filtre est basse.

Or un filtre passe-bas intercalé entre le capteur 18 et les circuits recevant le signal SC devrait avoir une fréquence de coupure très basse, de l'ordre du Herz ou même inférieure à un Herz, pour être efficace. Le retard du signal SC par rapport au signal produit par le capteur 18 serait donc assez important et deviendrait gênant dans tous les cas où le conducteur du véhicule déplace volontairement et rapidement la pédale d'accélérateur 17.

Il est cependant possible, si on le désire, de supprimer les variations de la puissance mécanique Pn dues aux petits déplacements de la pédale d'accélérateur 17 mentionnés ci-dessus sans pour autant introduire un retard inacceptable en cas de déplacement rapide de cette pédale 17.

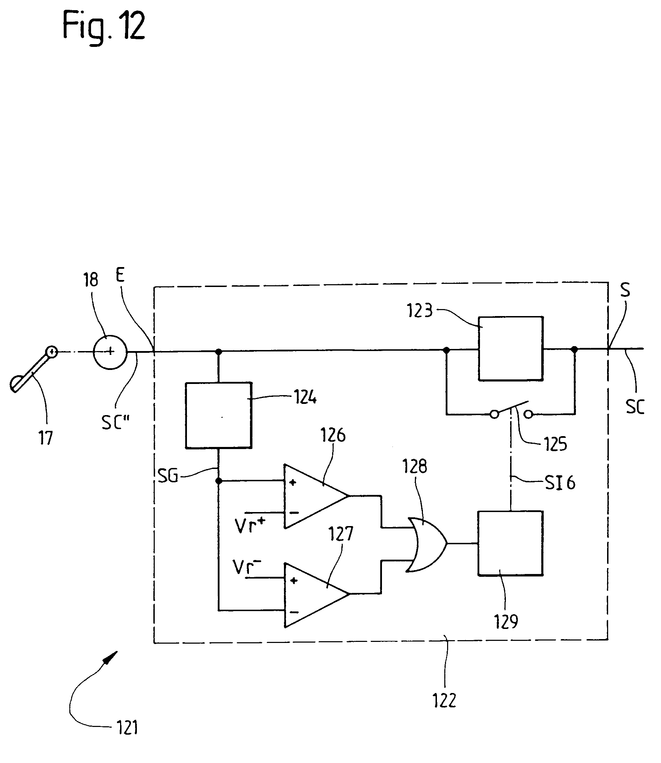

Pour cela, on peut par exemple remplacer les moyens de commande constitués simplement par la pédale d'accélérateur 17 et le capteur 18 dans les formes d'exécution décrites ci-dessus par des moyens de commande tels que ceux qui sont représentés à la figure 12 avec la référence générale 121.

Comme ceux qui ont été décrits ci-dessus, les moyens de commande 121 comportent une pédale d'accélérateur et un capteur fournissant un signal représentatif de la position de cette pédale, qui sont également respectivement désignés par les références 17 et 18.

Dans le présent exemple, le signal fourni par le capteur 18 sera désigné par la référence SC''.

En plus de cette pédale 17 et de ce capteur 18, les moyens de commande 121 comportent un circuit de filtrage à commutation 122 dont le rôle et le fonctionnement seront rendus évidents par la description qui suit.

L'entrée E du circuit de filtrage à commutation 122 est reliée, d'une part, au capteur 18 et, d'autre part, aux entrées d'un filtre passe-bas 123 et d'un différentiateur 124, ainsi qu'à une première borne d'un interrupteur 125.

La sortie du filtre 123 et la deuxième borne de l'interrupteur 125 sont reliées l'une à l'autre ainsi qu'à la sortie S du circuit 122 qui délivre le signal SC.

Le filtre 123, le différentiateur 124 et l'interrupteur 125 ne seront pas décrits en détail car ils peuvent être réalisés de diverses manières bien connues.

On mentionnera simplement que l'interrupteur 125 est de préférence constitué par un élément électronique tel qu'un transistor ou un thyristor, et qu'il est agencé de manière à être ouvert ou fermé selon qu'un signal de commande SI6, dont l'élaboration sera décrite plus loin, est dans un premier ou un deuxième état.

On mentionnera également que le filtre passe-bas 123 est agencé de manière que sa fréquence de coupure soit de l'ordre du Herz, et même de préférence inférieure à un Herz. En outre, le filtre 123 est agencé de manière que la valeur du signal SC soit au moins sensiblement égale à la valeur moyenne du signal SC'' lorsque l'interrupteur 125 est ouvert.

On mentionnera encore que la valeur du signal SG fourni par le différentiateur 124 est, de manière classique, toujours proportionnelle à la pente du signal SC''. En d'autres termes, ce signal SG est positif ou négatif selon que le signal SC'' croît ou décroît, c'est-à-dire selon que la pédale 17 est déplacée en direction de sa butée de fin de course ou en direction de sa position de repos, et la valeur absolue de ce signal SG est proportionnelle à la vitesse de déplacement de cette pédale 17.

Le signal SG est appliqué à l'entrée directe, désignée par le signe +, d'un premier comparateur 126, ainsi qu'à l'entrée inverse, désignée par le signe -, d'un deuxième comparateur 127. L'entrée inverse - du comparateur 126 reçoit une tension de référence positive Vr⁺ et l'entrée directe + du comparateur 127 reçoit une tension de référence négative Vr⁻ dont la valeur absolue est égale à la valeur de la tension Vr⁺.

Les deux tensions de référence Vr⁺ et Vr⁻ sont fournies par une source qui n'a pas été représentée et qui est agencée de manière que la valeur de la tension Vr⁺ soit égale à celle que le signal SG a lorsque la pédale 17 est déplacée à une vitesse déterminée en direction de sa position de fin de course, et que la valeur de la tension Vr⁻ soit égale à celle que le signal SG a lorsque cette pédale 17 est déplacée à la même vitesse déterminée en direction de sa position de repos.

A titre d'exemple, cette vitesse déterminée peut être égale à la vitesse moyenne de la pédale 17 a lorsqu'elle est déplacée entre ses deux positions extrêmes en 0,5 seconde.

Les comparateurs 126 et 127 ne seront pas non plus décrits en détail car ils peuvent aussi être réalisés de diverses manières bien connues. On mentionnera simplement qu'ils sont agencés de manière que leur sortie présente une tension sensiblement nulle ou une tension positive selon que leur entrée directe + est négative ou positive par rapport à leur entrée inverse -. En accord avec une convention très largement acceptée, on dira que la sortie du comparateur 126 ou 127 est à l'état logique "0" ou à l'état logique "1" selon qu'elle présente une tension sensiblement nulle ou une tension positive.

Les sorties des comparateurs 126 et 127 sont reliées, chacune, à une entrée d'une porte OU 128 dont la sortie est reliée à l'entrée d'un circuit 129 de commande de l'interrupteur 125 agencé de manière que le signal SI6 ait son premier ou son deuxième état, c'est-à-dire que l'interrupteur 125 soit ouvert ou fermé, selon que son entrée est à l'état logique "0" ou à l'état logique "1".

Le fonctionnement des moyens de commande 121 ne sera pas décrit en détail car il découle facilement des explications données ci-dessus.

On voit en effet facilement que tant que le conducteur d'un véhicule selon la présente invention équipé de ce circuit de commande 121 ne modifie pas volontairement la position de la pédale 17, le signal SG est nul et les sorties des comparateurs 126 et 127 sont toutes deux à l'état logique "0", de même que la sortie de la porte OU 128.

Le signal SI6 est donc dans son premier état, et l'interrupteur 125 est ouvert.

Le signal SC est donc pratiquement identique au signal SC'', mais ne présente pas les petites variations de ce dernier qui sont dues aux petits déplacements involontaires de la pédale 17 et qui sont éliminées par le filtre 123. Ces petits déplacements de la pédale 17 ne provoquent donc plus de variation de la puissance mécanique Pn fournie par le moteur de traction 3 à la roue 2.

Il en est de même lorsque le conducteur du véhicule déplace la pédale 17 à une vitesse inférieure à la vitesse déterminée mentionnée ci-dessus. Selon le sens de ce déplacement, le signal SG devient positif ou négatif mais reste cependant compris entre les deux tensions de référence Vr⁺ et Vr⁻. Les sorties des comparateurs 126 et 127 restent donc à l'état logique "0" et l'interrupteur 125 reste ouvert. Le signal SC varie donc comme le signal SC'', sans présenter les petites variations que ce dernier peut présenter.

Par contre, lorsque le conducteur du véhicule déplace la pédale 17 à une vitesse supérieure à la vitesse déterminée mentionnée ci-dessus, le signal SG devient soit plus positif que la tension Vr⁺ soit plus négatif que la tension Vr⁻ selon le sens du déplacement de cette pédale 17. La sortie de l'un des comparateurs 126 et 127 passe alors à l'état logique "1", de sorte que le signal SI6 prend son deuxième état et que l'interrupteur 125 se ferme, court-circuitant ainsi le filtre 123. Le signal SC est alors identique au signal SC'' et varie immédiatement comme ce dernier.

On voit que les moyens de commande 121 permettent effectivement de supprimer les variations de la puissance mécanique Pn fournie par le moteur 3 à la roue 2 dues aux petits déplacements involontaires de la pédale 17 sans pour autant introduire un retard inacceptable en cas de déplacement rapide de cette pédale 17.

Les véhicules 1, 51, 91 et 111 décrits ci-dessus à l'aide des figures 1, 5, 9 et 11 ne comportent qu'une seule roue motrice entraînée par un seul moteur électrique. Il est évident que la présente invention s'applique également aux véhicules comportant plusieurs roues motrices entraînées ensemble par un seul moteur ou entraînées par groupes ou individuellement par plusieurs moteurs.

De même, la pédale d'accélérateur 17 de ces véhicules 1, 51, 91 et 111 peut bien entendu être remplacée par tout autre dispositif actionnable par le conducteur de ces véhicules, tel que, par exemple, une manette.

De nombreuses autres modifications peuvent être apportées aux véhicules décrits ci-dessus sans pour autant sortir du cadre de la présente invention tel que défini par les revendications.

Ainsi, par exemple, le réglage de la vitesse de rotation du moteur à carburant d'un véhicule selon la présente invention peut être assuré par des moyens différents de ceux qui ont été décrits, notamment à l'aide d'un ordinateur programmé de manière à fournir les divers signaux nécessaires à ce réglage en fonction des signaux SC et SR mentionnés ci-dessus.

De même, dans le véhicule 1 de la figure 1, le générateur 6 peut être remplacé par un générateur produisant une tension alternative multiphasée, par exemple triphasée, le circuit de réglage 7 et le circuit de commande 4 étant évidemment adaptés en conséquence. Ce circuit de réglage 7, notamment, comporte dans un tel cas plusieurs premiers éléments de réglage 10 branchés chacun entre deux des bornes du générateur 6 et plusieurs deuxièmes éléments de réglage 13 branchés chacun entre une des bornes du générateur 6 et une des bornes du circuit de commande 4, la commande de ces éléments de réglage 10 et 13 étant identique à celle des éléments 10 et 13 de la figure 1.

## Revendications

1. Véhicule automobile comportant :
- un moteur à carburant (5; 55) pour produire une première puissance mécanique (Pm);
- un générateur (6; 56) pour convertir ladite première puissance mécanique (Pm) en une première puissance électrique (Pe);
- des moyens de commande (17, 18) actionnables par un conducteur dudit véhicule pour produire un signal de consigne (SC) représentatif d'une puissance de consigne (Pc);
- une roue motrice (2); et
- des moyens moteurs (3, 4; 3, 54) pour fournir une deuxième puissance mécanique (Pn) à ladite roue motrice (2) à partir d'une deuxième puissance électrique (Pf), lesdits moyens moteurs (3, 4; 3, 54) comprenant un moteur électrique (3) couplé mécaniquement à ladite roue motrice (2) et un circuit de commande (4; 54) dudit moteur électrique (3) répondant audit signal de consigne (SC) pour régler la valeur de ladite deuxième puissance mécanique (Pn) à la valeur de ladite puissance de consigne (Pc);
caractérisé par le fait que ledit véhicule comporte en outre des moyens de réglage (7, 14 à 16, 19, 20; 14 à 16, 57 à 63) répondant audit signal de consigne (SC) pour régler la vitesse de rotation (R) dudit moteur à carburant (5; 55) à la valeur pour laquelle ladite première puissance mécanique (Pm) est au moins sensiblement égale, d'une part, à ladite puissance de consigne (Pc) et, d'autre part, à une fraction déterminée de la puissance mécanique maximale dudit moteur à carburant (5; 55) à ladite valeur de vitesse de rotation, lesdits moyens de réglage (7, 14 à 16, 19, 20; 14 à 16, 57 à 63) comprenant des moyens de transfert (7; 57) couplés électriquement audit générateur (6; 56) et auxdits moyens moteurs (3, 4; 3, 54) pour produire ladite deuxième puissance électrique (Pf) à partir de ladite première puissance électrique (Pe) et que le couple de freinage exercé par le générateur (6; 56) sur le moteur à carburant (5; 55) est diminué lorsqu'une augmentation de ladite vitesse de rotation (R) est demandée.

2. Véhicule selon la revendication 1, caractérisé par le fait que lesdits moyens de réglage (7, 14 à 16, 19, 20) comportent des moyens (14 à 16) pour produire un signal de mesure (SR) représentatif de ladite vitesse de rotation (R) et des moyens (19,20) pour fournir un signal de comparaison (SI1, SI2) entre ledit signal de mesure (SR) et ledit signal de consigne (SC), et par le fait que lesdits moyens de transfert (7) sont agencés de manière à répondre audit signal de comparaison (SI1, SI2) pour diminuer ledit couple de freinage lorsque ledit signal de mesure (SR) est inférieur audit signal de consigne (SC).

3. Véhicule selon la revendication 2, caractérisé par le fait que lesdits moyens de transfert (7) sont aussi agencés de manière à répondre audit signal de comparaison (SI1, SI2) pour augmenter le couple de freinage exercé par ledit générateur (6) sur ledit moteur à carburant (5) lorsque ledit signal de mesure (SR) est supérieur audit signal de consigne (SC).

4. Véhicule selon la revendication 3, caractérisé par le fait que lesdits moyens de transfert (7) comportent un premier élément de réglage (10) branché entre une première borne (6a) et une deuxième borne (6b) dudit générateur (6) et un deuxième élément de réglage (13) branché entre ladite première borne (6a) dudit générateur (6) et une borne (4a) dudit circuit de commande (4), ledit premier élément de réglage (10) comprenant une première résistance (8) et un premier interrupteur (9) branché en série avec ladite première résistance (8) et répondant audit signal de comparaison (SI1, SI2) pour connecter ladite première résistance (8) entre lesdites bornes (6a, 6b) dudit générateur (6) lorsque ledit signal de mesure (SR) est supérieur audit signal de consigne (SC) et pour déconnecter ladite première résistance (8) desdites bornes (6a, 6b) dudit générateur (6) lorsque ledit signal de mesure (SR) est inférieur ou égal audit signal de consigne (SC), et ledit deuxième élément de réglage (13) comprenant une deuxième résistance (11) et un deuxième interrupteur (12) branché en parallèle avec ladite deuxième résistance (11) et répondant audit signal de comparaison (SI1, SI2) pour connecter ladite deuxième résistance (11) en série entre ladite première borne (6a) dudit générateur (6) et ladite borne (4a) dudit circuit de commande (4) lorsque ledit signal de mesure (SR) est inférieur audit signal de consigne (SC) et pour relier directement ladite première borne (6a) dudit générateur (6) à ladite borne (4a) dudit circuit de commande (4) lorsque ledit signal de mesure (SR) est supérieur ou égal audit signal de consigne (SC).

5. Véhicule selon la revendication 1 ou 2, caractérisé par le fait que lesdits moyens de réglage (14 à 16, 57 à 63) comportent des moyens (14 à 16) pour produire un signal de mesure (SR) représentatif de ladite vitesse de rotation (R) et des moyens (61 à 63) pour fournir un signal de comparaison (SI3 à SI5, SD) entre ledit signal de mesure (SR) et ledit signal de consigne (SC), par le fait que ledit véhicule comporte en outre un dispositif d'alimentation en carburant dudit moteur à carburant (55) répondant audit signal de comparaison (SI3 à SI5, SD) pour régler ladite première puissance mécanique (Pm) à une valeur supérieure à celle de ladite fraction déterminée de ladite puissance mécanique maximale lorsque ledit signal de mesure (SR) est inférieur audit signal de consigne (SC), à ladite fraction déterminée de ladite puissance mécanique maximale lorsque ledit signal de mesure (SR) est égal audit signal de consigne (SC), et à une valeur inférieure à celle de ladite fraction déterminée de ladite puissance mécanique maximale lorsque ledit signal de mesure (SR) est supérieur audit signal de consigne, et par le fait que lesdits moyens de transfert (57) sont agencés de manière à répondre audit signal de comparaison (SI3 à SI5, SD) pour diminuer le couple de freinage exercé par ledit générateur (6) sur ledit moteur à carburant (5) lorsque ledit signal de mesure (SR) est inférieur audit signal de consigne (SC).

6. Véhicule selon la revendication 5, caractérisé par le fait que lesdits moyens de transfert comportent des moyens (57) branchés entre ledit générateur (56) et ledit circuit de commande (54) et répondant audit signal de comparaison (SI3 à SI5, SD) pour fournir audit circuit de commande (54) une puissance électrique égale à ladite première puissance électrique (Pe) lorsque ledit signal de mesure (SR) est supérieur ou égal audit signal de consigne (SC) et pour fournir audit circuit de commande (54) une puissance électrique inférieure à ladite première puissance électrique (Pe) lorsque ledit signal de mesure (SR) est inférieur audit signal de consigne (SC).

7. Véhicule selon la revendication 6, caractérisé par le fait qu'il comporte en outre une source d'énergie électrique rechargeable (93) agencée de manière à fournir audit circuit de commande (54) une puissance électrique ayant une valeur égale à la différence entre ladite puissance de consigne (Pc) et la puissance électrique fournie par ledit convertisseur (57).

8. Véhicule selon la revendication 1 ou 2, caractérisé :
- par le fait que lesdits moyens de réglage (14 à 16, 57 à 63) comportent des moyens (14 à 16) pour produire un signal de mesure (SR) représentatif de ladite vitesse de rotation (R) et des moyens (61 à 63) pour fournir un signal de comparaison (SI3 à SI5, SD) entre ledit premier signal de mesure (SR) et un deuxième signal de consigne (SC');
- par le fait que lesdits moyens de transfert (57) comportent un convertisseur (57) branché entre ledit générateur (56) et ledit circuit de commande (54) et répondant audit signal de comparaison (SI3 à SI5, SD) pour fournir audit circuit de commande (54) une puissance électrique égale à ladite première puissance électrique (Pe) lorsque ledit signal de mesure (SR) est supérieur ou égal audit deuxième signal de consigne (SC') et pour fournir audit circuit de commande (54) une puissance électrique inférieure à ladite première puissance électrique (Pe) lorsque ledit signal de mesure (SR) est inférieur audit deuxième signal de consigne (SC');
- par le fait que ledit véhicule comporte en outre une source d'énergie électrique rechargeable (93) agencée de manière à fournir audit circuit de commande (54) une puissance électrique ayant une valeur égale à la différence entre ladite puissance de consigne (Pc) et la puissance électrique fournie par ledit convertisseur (54), et un dispositif d'alimentation en carburant dudit moteur à carburant (55) répondant audit signal de comparaison (SI3 à SI5, SD) pour régler ladite première puissance mécanique (Pm) à une valeur supérieure à celle de ladite fraction déterminée de ladite puissance mécanique maximale lorsque ledit signal de mesure (SR) est inférieur audit deuxième signal de consigne (SC'), à ladite fraction déterminée de ladite puissance mécanique maximale lorsque ledit signal de mesure (SR) est égal audit deuxième signal de consigne (SC'), et à une valeur inférieure à celle de ladite fraction déterminée de ladite puissance mécanique maximale lorsque ledit signal de mesure (SR) est supérieure audit deuxième signal de consigne, ladite source (93) comportant des moyens pour fournir un signal de détection (SB) représentatif de la quantité d'énergie électrique (Q) contenue dans ladite source (93);
- et par le fait que ledit véhicule comporte en outre des moyens (92) répondant audit signal de détection (SB) pour produire ledit deuxième signal de consigne (SC') avec une valeur égale à la somme de la valeur dudit premier signal de consigne (SC) et d'une valeur prédéterminée lorsque ladite quantité d'énergie électrique (Q) devient inférieure à une première quantité prédéterminée (Q1) et avec une valeur égale à la valeur dudit premier signal signal de consigne (SC) lorsque ladite quantité d'énergie électrique (Q) devient supérieure à une deuxième quantité prédéterminée (Q2).

## Claims

1. Motor vehicle comprising :
- a fuel engine (5; 55) for producing a first mechanical power (Pm);
- a generator (6; 56) for converting said first mechanical power (Pm) into a first electrical power (Pe);
- control means (17, 18) operable by a driver of said vehicle to produce a power setting signal (SC) representative of a desired power (Pc);
- a driving wheel (2); and
- motor means (3, 4; 3, 54) for supplying a second mechanical power (Pn) to said driving wheel (2) from a second electrical power (Pf), said motor means (3, 4; 3, 54) including an electric motor (3) mechanically coupled to said driving wheel (2) and a circuit (4; 54) for controlling said electric motor (3) that is responsive to said power setting signal (SC) to regulate the value of said second mechanical power (Pn) to the value of said desired power (Pc);
characterized in that said vehicle further comprises regulating means (7, 14-16, 19, 20; 14-16, 57-63) responsive to said power setting signal (SC) to regulate the rotational speed (R) of said fuel engine (5; 55) to the value at which said first mechanical power (Pm) is at least substantially equal, on the one hand, to said desired power (Pc) and, on the other hand, to a set fraction of the maximum mechanical power of said fuel engine (5; 55) at said value of the rotational speed, said regulating means (7, 14-16, 19, 20; 14-16, 57-63) including transfer means (7; 57) that are electrically coupled to said generator (6; 56) and to said motor means (3, 4; 3, 54) to produce said second electrical power (Pf) from said first electrical power (Pe), and in that the braking torque exerted by the generator (6; 56) on the fuel engine (5; 55) is decreased when an increase of said rotational speed (R) is requested.

2. Vehicle according to claim 1, characterized in that said regulating means (7, 14-16, 19, 20) include means (14-16) for producing a measurement signal (SR) representative of said rotational speed (R) and means (19, 20) for supplying a comparison signal (SI1, SI2) between said measurement signal (SR) and said power setting signal (SC), and in that said transfer means (7) are arranged to respond to said comparison signal (SI1, SI2) to decrease said braking torque when said measurement signal (SR) is less than said power setting signal (SC).

3. Vehicle according to claim 2, characterized in that said transfer means (7) are also arranged to respond to said comparison signal (SI1, SI2) to increase the braking torque exerted by said generator (6) on said fuel engine (5) when said measurement signal (SR) is greater than said power setting signal (SC).

4. Vehicle according to claim 3, characterized in that said transfer means (7) include a first regulating element (10) connected across a first terminal (6a) and a second terminal (6b) of said generator (6) and a second regulating element (13) connected between said first terminal (6a) of said generator (6) and a terminal (4a) of said control circuit (4), said first regulating element (10) including a first resistor (8) and a first switch (9) connected in series with said first resistor (8) and responsive to said comparison signal (SI1, SI2) to connect said first resistor (8) across said terminals (6a, 6b) of said generator (6) when said measurement signal (SR) is greater than said power setting signal (SC) and to disconnect said first resistor (8) from said terminals (6a, 6b) of said generator (6) when said measurement signal (SR) is less than or equal to said power setting signal (SC), and said second regulating element (13) including a second resistor (11) and a second switch (12) connected in parallel with said second resistor (11) and responsive to said comparison signal (SI1, SI2) to connect said second resistor (11) in series between said first terminal (6a) of said generator (6) and said terminal (4a) of said control circuit (4) when said measurement signal (SR) is less than said power setting signal (SC) and directly to connect said first terminal (6a) of said generator (6) to said terminal (4a) of said control circuit (4) when said measurement signal (SR) is greater than or equal to said power setting signal (SC).

5. Vehicle according to claim 1 or 2, characterized in that said regulating means (14-16, 57-63) include means (14-16) for producing a measurement signal (SR) representative of said rotational speed (R) and means (61-63) for supplying a comparison signal (SI3-SI5, SD) between said measurement signal (SR) and said power setting signal (SC), in that said vehicle further comprises a device for supplying fuel to said fuel engine (55) that is responsive to said comparison signal (SI3-SI5, SD) to regulate said first mechanical power (Pm) to a value greater than that of said set fraction of said maximum mechanical power when said measurement signal (SR) is less than said power setting signal (SC), to said set fraction of said maximum mechanical power when said measurement signal (SR) is equal to said power setting signal (SC), and to a value less than that of said set fraction of said maximum mechanical power when said measurement signal (SR) is greater than said power setting signal, and in that said transfer means (57) are arranged to respond to said comparison signal (SI3-SI5, SD) to reduce the braking torque exerted by said generator (6) on said fuel engine (5) when said measurement signal (SR) is less than said power setting signal (SC).

6. Vehicle according to claim 5, characterized in that said transfer means include means (57) connected between said generator (56) and said control circuit (54) and responsive to said comparison signal (SI3-SI5, SD) for supplying to said control circuit (54) an electrical power equal to said first electrical power (Pe) when said measurement signal (SR) is greater than or equal to said power setting signal (SC) and for supplying to said control circuit (54) an electrical power less than said first electrical power (Pe) when said measurement signal (SR) is less than said power setting signal (SC).

7. Vehicle according to claim 6, characterized in that it further comprises a rechargeable source of electrical energy (93) arranged to supply to said control circuit (54) an electrical power having a value equal to the difference between said desired power (Pc) and the electrical power supplied by said converter (57).

8. Vehicle according to claim 1 or 2, characterized:
- in that said regulating means (14-16, 57-63) include means (14-16) for producing a measurement signal (SR) representative of said rotational speed (R) and means (61-63) for supplying a comparison signal (SI3-SI5, SD) between said first measurement signal (SR) and a second power setting signal (SC');
- in that said transfer means (57) include a converter (57) connected between said generator (56) and said control circuit (54) and responsive to said comparison signal (SI3-SI5, SD) for supplying to said control circuit (54) an electric power equal to said first electrical power (Pe) when said measurement signal (SR) is greater than or equal to said second power setting signal (SC') and for supplying to said control circuit (54) an electrical power less than said first electrical power (Pe) when said measurement signal (SR) is less than said second power setting signal (SC');
- in that said vehicle further comprises a rechargeable source of electrical energy (93) arranged to supply to said control circuit (54) an electrical power having a value equal to the difference between said desired power (Pc) and the electrical power supplied by said converter (54), and a device for supplying fuel to said fuel engine (55) that is responsive to said comparison signal (SI3-SI5, SD) to regulate said first mechanical power (Pm) to a value greater than that of said set fraction of said maximum mechanical power when said measurement signal (SR) is less than said second power setting signal (SC'), to said set fraction of said maximum mechanical power when said measurement signal (SR) is equal to said second power setting signal (SC'), and to a value less than that of said set fraction of said maximum mechanical power when said measurement signal (SR) is greater than said second power setting signal, said source (93) including means for supplying a detection signal (SB) representative of the quantity of electrical energy (Q) contained in said source (93);
- and in that said vehicle further comprises means (92) responsive to said detection signal (SB) for producing said second power setting signal (SC') with a value equal to the sum of the value of said first power setting signal (SC) and of a predetermined value when said quantity of electrical energy (Q) becomes less than a first predetermined quantity (Q1), and with a value equal to the value of said first power setting signal (SC) when said quantity of electrical energy (Q) becomes greater than a second predetermined quantity (Q2).

## Patentansprüche

1. Kraftfahrzeug, mit:
- einem Verbrennungsmotor (5; 55) zum Erzeugen einer ersten mechanischen Leistung (Pm);
- einem Generator (6; 56) zum Umsetzen der ersten mechanischen Leistung (Pm) in eine erste elektrische Leistung (Pe);
- Steuermitteln (17, 18), die durch einen Fahrer des Fahrzeugs betätigbar sind, um ein Einstellsignal (SC) zu erzeugen, das eine Einstelleistung (Pc) darstellt;
- einem Antriebsrad (2); und
- Motormitteln (3, 4; 3, 54), die anhand einer zweiten elektrischen Leistung (Pf) an das Antriebsrad (2) eine zweite mechanische Leistung (Pn) liefern, wobei die Motormittel (3, 4; 3, 54) einen Elektromotor (3), der mechanisch mit dem Antriebsrad (2) gekoppelt ist, und eine Steuerschaltung (4; 54) für den Elektromotor (3) umfassen die auf das Einstellsignal (SC) antwortet, um den Wert, der zweiten mechanischen Leistung (Pn) auf den Wert der Einstelleistung (Pc) zu regeln;
dadurch gekennzeichnet, daß das Fahrzeug außerdem Regelungsmittel (7, 14 bis 16, 19, 20; 14 bis 16, 57 bis 63) umfaßt, die auf das Einstellsignal (SC) antworten, um die Drehzahl (R) des Verbrennungsmotors (5; 55) auf den Wert zu regeln, für den die erste mechanische Leistung (Pm) wenigstens einerseits im wesentlichen gleich der Einstelleistung (Pc) und andererseits im wesentlichen gleich einem bestimmten Bruchteil der maximalen mechanischen Leistung des Verbrennungsmotors (5; 55) bei dem Drehzahlwert ist, daß die Regelungsmittel (7, 14 bis 16, 19, 20; 14 bis 16, 57 bis 63) Übertragungsmittel (7; 57) umfassen, die mit dem Generator (6; 56) und mit den Motormitteln (3, 4; 3, 54) elektrisch gekoppelt sind, um die zweite elektrische Leistung (Pf) anhand der ersten elektrischen Leistung (Pe) zu erzeugen, und daß das Bremsmoment, das vom Generator (6; 56) auf den Verbrennungsmotor (5; 55) ausgeübt wird, erniedrigt wird, wenn eine Erhöhung der Drehzahl (R) gefordert ist.

2. Fahrzeug nach Anspruch 1, dadurch gekennzeichnet, daß die Regelungsmittel (7, 14 bis 16, 19, 20) Mittel (14 bis 16) zum Erzeugen eines Meßsignals (SR), das die Drehzahl (R) darstellt, sowie Mittel (19, 20) zum Liefern eines Vergleichssignals (SI1, SI2) zwischen dem Meßsignal (SR) und dem Einstellsignal (SC) enthalten und daß die Übertragungsmittel (7) in der Weise angeordnet sind, daß sie als Antwort auf das Vergleichssignal (SI1, SI2) das Bremsmoment verringern, wenn das Meßsignal (SR) kleiner als das Einstellsignal (SC) ist.

3. Fahrzeug nach Anspruch 2, dadurch gekennzeichnet, daß die Übertragungsmittel (7) außerdem so beschaffen sind, daß sie als Antwort auf das Vergleichssignal (SI1, SI2) das vom Generator (6) auf den Verbrennungsmotor (5) ausgeübte Bremsmoment erhöhen, wenn das Meßsignal (SR) größer als das Einstellsignal (SC) ist.

4. Fahrzeug nach Anspruch 3, dadurch gekennzeichnet, daß die Übertragungsmittel (7) ein erstes Regelungselement (10), das zwischen einen ersten Anschluß (6a) und einem zweiten Anschluß (6b) des Generators (6) geschaltet ist, sowie ein zweites Regelungselement (13), das zwischen den ersten Anschluß (6a) des Generators (6) und einen Anschluß (4a) der Steuerschaltung (4) geschaltet ist, umfassen, wobei das erste Regelungselement (10) einen ersten Widerstand (8) und einen mit dem ersten Widerstand (8) in Serie geschalteten ersten Ein/Aus-Schalter (9) umfaßt und als Antwort auf das Vergleichssignal (SI1, SI2) den ersten Widerstand (8) zwischen den Anschlüssen (6a, 6b) des Generators (6) anschaltet, wenn das Meßsignal (SR) größer als das Einstellsignal ist, und den ersten Widerstand (8) von den Anschlüssen (6a, 6b) des Generators (6) trennt, wenn das Meßsignal (SR) kleiner oder gleich dem Einstellsignal (SC) ist, und wobei das zweite Regelungselement (13) einen zweiten Widerstand (11) und einen zweiten zum zweiten Widerstand (11) parallelgeschalteten Unterbrecher (12) umfaßt und auf das Vergleichssignal (SI1, SI2) anspricht um den zweiten Widerstand (11) zwischen den ersten Anschluß (6a) des Generators (6) und den Anschluß (4a) der Steuerschaltung (4) in Serie zu schalten, wenn das Meßsignal (SR) kleiner als das Einstellsignal (SC) ist, und den ersten Anschluß (6a) des Generators (6) direkt mit dem Anschluß (4a) der Steuerschaltung (4) zu verbinden, wenn das Meßsignal (SR) größer oder gleich dem Einstellsignal (SC) ist.

5. Fahrzeug nach Anspruch 1 oder 2, dadurch gekennzeichnet, daß die Regelungsmittel (14 bis 16, 57 bis 63) Mittel (14 bis 16) zum Erzeugen eines Meßsignals, das die Drehzahl (R) darstellt, sowie Mittel (61 bis 63) zum Liefern eines Vergleichssignals (SI3 bis SI5, SD) zwischen dem Meßsignal (SR) und dem Einstellsignal (SC) umfassen, daß das Fahrzeug außerdem eine Kraftstoffversorgungseinrichtung für den Verbrennungsmotor (55) enthält, die als Antwort auf das Vergleichssignal (SI3 bis SI5, SD) die erste mechanische Leistung (Pm) auf einen Wert regelt, der größer als derjenige des genannten bestimmten Bruchteils der maximalen mechanischen Leistung ist, wenn das Meßsignal (SR) kleiner als das Einstellsignal (SC) ist, auf den bestimmten Bruchteil der maximalen mechanischen Leistung regelt, wenn das Meßsignal (SR) gleich dem Einstellsignal (SC) ist, und auf einen Wert regelt, der kleiner als derjenige des bestimmten Bruchteils der maximalen mechanischen Leistung ist, wenn das Meßsignal (SR) größer als das Einstellsignal ist, und daß die Übertragungsmittel (57) so beschaffen sind, daß sie als Antwort auf das Vergleichssignal (SI3 bis SI5, SD) das vom Generator (6) auf den Verbrennungsmotor (5) ausgeübte Bremsmoment verringern, wenn das Meßsignal (SR) kleiner als das Einstellsignal (SC) ist.

6. Fahrzeug nach Anspruch 5, dadurch gekennzeichnet, daß die Übertragungsmittel Mittel (57) umfassen, die zwischen den Generator (56) und die Steuerschaltung (54) geschaltet sind und als Antwort auf das Vergleichssignal (SI3 bis SI5, SD) an die Steuerschaltung (54) eine elektrische Leistung liefern, die gleich der ersten elektrischen Leistung (Pe) ist, wenn das Meßsignal (SR) größer oder gleich dem Einstellsignal (SC) ist, und an die Steuerschaltung (54) eine elektrische Leistung liefern, die kleiner als die erste elektrische Leistung (Pe) ist, wenn das Meßsignal (SR) kleiner als das Einstellsignal (SC) ist.

7. Fahrzeug nach Anspruch 6, dadurch gekennzeichnet, daß es außerdem eine wiederaufladbare Quelle (93) für elektrische Energie umfaßt, die so beschaffen ist, daß sie an die Steuerschaltung (54) eine elektrische Leistung liefert, die einen Wert hat, der gleich der Differenz zwischen der Einstelleistung (Pc) und der vom Umsetzer (57) gelieferten elektrischen Leistung ist.

8. Fahrzeug nach Anspruch 1 oder 2, dadurch gekennzeichnet,
- daß die Regelungsmittel (14 bis 16, 57 bis 63) Mittel (14 bis 16) zum Erzeugen eines Meßsignals (SR), das die Drehzahl (R) darstellt, sowie Mittel (61 bis 63) zum Liefern eines Vergleichssignals (SI3 bis SI5, SD) zwischen dem ersten Meßsignal (SR) und einem zweiten Einstellsignal (SC') umfassen;
- daß die Übertragungsmittel (57) einen Umsetzer (57) umfassen, der zwischen den Generator (56) und die Steuerschaltung (54) geschaltet ist und als Antwort auf das Vergleichssignal (SI3 bis SI5, SD) an die Steuerschaltung (54) eine elektrische Leistung liefert, die gleich der ersten elektrischen Leistung (Pe) ist, wenn das Meßsignal (SR) größer oder gleich dem zweiten Einstellsignal (SC') ist, und an die Steuerschaltung (54) eine elektrische Leistung liefert, die kleiner als die erste elektrische Leistung (Pe) ist, wenn das Meßsignal (SR) kleiner als das zweite Einstellsignal (SC') ist;
- daß das Fahrzeug außerdem eine wiederaufladbare Quelle (93) für elektrische Energie, die so beschaffen ist, daß sie an die Steuerschaltung (54) eine elektrische Leistung liefert, die einen Wert hat, der gleich der Differenz zwischen der Einstelleistung (Pc) und der vom Umsetzer (54) gelieferten elektrischen Leistung ist, sowie eine Kraftstoffversorgungseinrichtung für den Verbrennungsmotor (55) umfaßt, die als Antwort auf das Vergleichssignal (SI3 bis SI5, SD) die erste mechanische Leistung (Pm) auf einen Wert regelt, der größer als jener des bestimmten Bruchteils der maximalen mechanischen Leistung ist, wenn das Meßsignal (SR) kleiner als das zweite Einstellsignal (SC') ist, auf den bestimmten Bruchteil der maximalen mechanischen Leistung regelt, wenn das Meßsignal (SR) gleich dem zweiten Einstellsignal (SC') ist, und auf einen Wert regelt, der kleiner als derjenige des bestimmten Bruchteils der maximalen mechanischen Leistung ist, wenn das Meßsignal (SR) größer als das zweite Einstellsignal ist, wobei die Quelle (93) Mittel zum Liefern eines Erfassungssignals enthält, das die in der Quelle (93) enthaltene Menge (Q) elektrischer Energie darstellt;
- daß das Fahrzeug außerdem Mittel (92) umfaßt, die als Antwort auf das Erfassungssignal (SC') das zweite Einstellsignal (SC') mit einem Wert, der gleich der Summe aus dem Wert des ersten Einstellsignals (SC) und aus einem vorgegebenen Wert ist, wenn die Menge (Q) elektrischer Energie kleiner als eine erste vorgegebene Menge (Q1) wird, bzw. mit einem Wert erzeugen, der gleich dem Wert des ersten Einstellsignals (SC) ist, wenn die Menge (Q) elektrischer Energie größer als eine zweite vorgegebene Menge (Q2) wird.
